# EUROPEAN PATENT SPECIFICATION

(11) **EP 1 033 706 B1**
(45) Date of publication and mention of the grant of the patent: **03.03.2004**
(21) Application number: 00111166.5
(22) Date of filing: 17.05.1989
(51) Int. Cl.: G11B 9/08, G11B 11/08, G03G 5/02, G11B 11/12, H04N 5/30, H04N 5/80, G03G 15/05

(54) **Electrostatic information recording medium and electrostatic information recording and reproducing method**
Elektrostatisches Informationsaufzeichnungsmedium und elektrostatische Informationsaufzeichnungs- und -wiedergabemethode
Milieu d'enregistrement électrostatique d'information et méthode d'enregistrement et de reproduction électrostatique d'information

(30) Priority: 17.05.1988 JP 12159288; 20.05.1988 JP 12360388; 24.05.1988 JP 12755188; 24.05.1988 JP 12755288; 24.05.1988 JP 12755388; 24.05.1988 JP 12755588; 24.05.1988 JP 12755688; 24.09.1988 JP 23949088; 26.09.1988 JP 24007088; 08.12.1988 JP 31048488; 27.12.1988 JP 33022688; 28.12.1988 JP 33158988; 15.03.1989 JP 6275489; 16.03.1989 JP 6426389; 18.03.1989 JP 6724389
(43) Date of publication of application: 06.09.2000
(62) Divisional of application: 95201292.0
(73) Proprietor: DAI NIPPON PRINTING CO., LTD., Tokyo 162 (JP)
(72) Inventor: Obata, Hiroyuki, 1-chome, Shinjuku-ku Tokyo 162 (JP); Take, Seiji, 1-chome, Shinjuku-ku Tokyo 162 (JP); Matsuo, Makoto, 1-chome, Shinjuku-ku Tokyo 162 (JP); Iijima, Masayuki, 1-chome, Shinjuku-ku Tokyo 162 (JP); Utsumi, Minoru, 1-chome, Shinjuku-ku Tokyo 162 (JP); Taniguchi, Yukio, 1-chome, Shinjuku-ku Tokyo 162 (JP)
(74) Representative: Bubb, Antony John Allen

(56) References cited:
- EP-A- 0 249 214
- EP-A- 0 327 236
- EP-A- 0 341 668
- EP-A- 0 342 968
- DE-A- 2 440 485
- DE-A- 3 712 473
- GB-A- 799 829
- US-A- 3 865 975
- US-A- 3 992 204
- US-A- 4 095 280
- US-A- 4 207 100
- US-A- 4 296 478
- US-A- 4 409 307
- US-A- 4 757 472

## Description

### BACKGROUND OF THE INVENTION

The present invention relates to an electrostatic information recording medium which may be used in an electrostatic information recording and reproducing method, by which the information can be electrostatically recorded and reproduced at any desired time.

Conventionally, silver salt photographing method is already known as a technique for high sensitivity photographing. In this photographing method, the photographed . image is recorded on film through the development process, and silver salt emulsion (such as photographic paper) is used for reproducing the image or it is reproduced on cathode ray tube (CRT) by optically scanning the developed film.

There is also ap electronic photographing technique, in which an electrode is deposited on photoconductive layer by evaporation and the surface of photoconductive layer is electrically charged by corona charging in dark place. Then, it is exposed to intensive light to make the exposed photoconductive layer electrically conductive. By removing the electric charge on that portion by leaking it to form electrostatic latent image on the surface of the photoconductive layer, and the toner is attached, which has electric charge with the polarity opposite to that of the remaining electrostatic charge. This technique is mostly used for duplication purpose and is not generally suitable for photographing because of low sensitivity. Since electrostatic charge carrying time is short, toner development is usually performed after electrostatic latent image is formed.

Further, there is the method for TV photographing technique, in which photographing is performed by the image pickup tube and the image information obtained by optical semiconductor is taken out as electric signal. This is directly outputted on CRT or is recorded on video by magnetic recording and the image is reproduced on CRT when desired.

Also, a method is known, in which thermoplastic materials having electric charge carrying property are laminated on transparent electrode and selenium particles are deposited by vacuum evaporation on the surface of the thermoplastic material and is infiltrate to prepare the recording medium. To record the information on this recording medium, the surface of the thermoplastic material is electrically charged by corona charging, and the image is exposed to light by applying voltage between the electrodes disposed at face-to-face positions. Thus, optical carrier is generated on the photoconductive particles in the exposure portion to form the latent image. For the development, the thermoplastic material is softened by heating, and only the photoconductive particles generating oprical carrier are migrated in the thermoplastic material layer. The information thus developed are reproduced as visible information according to the quantity of transmission light. (U.S. patent specifications No. 3,520,681, 4,101,321 and 4,496,642)

Silver salt photographing method is an excellent means to preserve the image of the object, but it requires a development process to form the silver salt image and also the complicated optical, electrical and chemical processings are involved in reproducing the image to hard copy and soft copy (CRT output), etc.

The electronic photographing technique is more simple and quicker than the silver salt photographing method in reproducing the electrostatic latent image, whereas the latent image can be preserved only for short period, and the dissociation of the development, image quality, etc. are inferior to those of silver salt method.

TV photographing technique requires linear sequential scanning to take out and record the electric image signals obtained by the pickup tube. Linear sequential scanning is performed by electron beam in the pickup tube and by magnetic head in video recording. Since resolution depends upon the number of scanning lines, it is extremely inferior to the planar analog recording such as silver salt photographing.

The recently developed TV image pickup technique using solid-state image sensor (such as CCD) is also essentially the same with regard to the resolution.

The problems involved in these techniques lie in the fact that the processing becomes more complicated if higher quality and resolution are required in the image recording and the memory function is lacking or image quality is basically poor if the processing is simplified.

US-A- 4 095 280 discloses are electrostatic information recording medium comprising an electrode and a layer of electrically photosensitive particulate material spaced apart from an insulating resin layer and a charge transporting layer of semiconductor material.

There is another technique, in which thermoplastic material layer containing selenium particle layer is provided on the transparent electrode and it is electrically charged by corona charging. After the image is exposed, thermoplastic material is softened and the image is heat-developed, and the information is reproduced as visible information. In this case, the electric charge information thus accumulated can be preserved for long period (10 years or more), whereas the application is limited as information recording means by camera because corona charging is needed for information recording. Also, on the surface of thermoplastic resin softened during heat development, the so-called frost phenomenon occurs, in which fine irregularities are caused by the repulsion between the surface electric charge, when it is electrically charged to higher potential. As the result, when the accumulated information is detected as surface potential, noise occurs and the resolution is adversely affected.

### SUMMARY OF THE INVENTION

The present invention is to solve the problems as described above, and it is to offer a new electrostatic information recording medium which may be used in an electrostatic information recording and reproducing method, which can produce an image of high quality at high resolution and the processing is simple and easy, whereby the recording can be achieved for long time and the characters, line drawings, images, codes and (1, 0) information can be reproduced arbitrarily in appropriate quality.

Therefore, an object of this invention is to provide an electrostatic information recording medium having excellent charge carrying property.

An object of embodiments of this invention is to provide an electrostatic information recording medium, by which audio information can be recorded together with characters, line drawings, codes and (1, 0) information.

Another object of enbodiments of the invention is to offer an electrostatic recording card of high quality and high resolution using the electrostatic information recording medium.

According to the present invention there is provided an electrostatic information recording medium as claimed in claim 1 below, preferred features of which are recited in claims 2 to 4 below.

The insulating resin layer and photoconductive or electrically conductive fine particle layer constitute an electric charge retaining layer.

The electric charge retaining layer may have the thickness of at least 0.1 µm or more from the viewpoint of the insulating property and it is preferably 100 µm or less from the viewpoint of flexibility.

The electric charge retaining layer of the electrostatic information recording medium may be composed of macromolecular material with high insulating property in order to suppress the migration of electric charge, and it must have specific resistance of 10¹² Ω · cm or more. Also, it is necessary the glass transition temperature of macromolecular material constituting the electric charge carrying layer should be higher than the environmental temperature. The glass transition temperature is the temperature, at which the gradient of the decrease of specific volume when the molten macromolecular materials is cooled down shows discontinuous change. In general, macromolecular material has the glass transition temperature peculiar to its material property. Below the glass transition temperature, one segment of molecular chain cannot migrate as a whole because heat energy is too low. On the other hand, if it is above the glass transition temperature, heat energy is increased and several or more atoms constituting the molecular chain can migrate, thus giving strong influence on specific heat, specific volume, toughness, brittleness temperature, etc.

Based on the innovative concept different from the conventional mode of thinking, the present inventors have found that, in using the insulating material as the electrostatic information recording medium, it is necessary to use it at less than the glass transition temperature to suit the property of macromolecular materials constituting it.

In order to prevent the leakage of the information electric charge it is essential that water absorption ratio of macromolecular material is low. If water absorption ratio is higher than 0.4 weight %, the resistivity is decreased by the influence of moisture content adsorbed in the resin and this leads to poor insulation. We also found that the electric charge carrying property is lowered by the diffusion of electric charge toward the directions of volume and surface area.

The electric charge retaining layer may consist of mono layer or built-up layers with insulating property.

A mono layer as used in the present invention must have specific resistance of 10¹² Ω·cm or more, and may be laminated on the electrode by the well-known Langmuir-Blodgett's technique. The molecules in mono layer are arranged in such manner that molecular chains are regularly disposed perpendicular to the electrode surface. Accordingly, the accumulated electric charge does not permeate to the direction of electrode plane, and it is maintained in stable condition. In addition, the film is very thin and of sufficient strength suitable for the use as an electrostatic information recording medium.

The photoconductive or electrically conductive particles present at the vicinity of the surface of the electric charge retaining layer may for a single particle layers or multiple particle layers, or the photoconductive or electrically conductive particles may be dispersed in the insulating resin layer and are laminated on the insulating resin layer on the electrode. Or, the photoconductive or electrically conductive particles may be dispersed in the insulating resin layer and are laminated on the electrode, and the information electric charge can be maintained in stable condition in the insulating resin layer.

When the particle layer in the electric charge retaining layer consists of photoconductive particles, the information electric charge with reverse polarity to transport carrier of the electric charge transport layer is first formed on the surface, and the light with the wavelength to absorb the photoconductive particles is uniformly irradiated. Then, both positive and negative carriers are generated on the particle layer of the portion with the information electric charge, and the carrier with reverse polarity to that of the information electric charge accumulated on the surface moves the electric charge transport layer and neutralizes the surface potential, and the electric charge with the same polarity as that of the surface electric charge is accumulated at the photoconductive particles as the information electric charge. Also, the electric charge transport layer does not transport the electric charge accumulated on the particle layer, and the electric charge once accumulated will be permanently preserved.

When the particle layer consists of electrically conductive particles, the electric charge on the surface of the electric charge transport layer accumulated as described above is migrated toward the electric charge transport layer without uniform exposure and is accumulated at the conductive particle layer and is preserved permanently on the conductive particle layer as the information electric charge. The information electric charge thus accumulated is extremely stabilized because it is accumulated within the insulating layer.

Next, description is given on an electrostatic information recording and reproducing method using an electrostatic recording medium according to the present invention. In the electrostatic information recording apparatus, the photosensitive member consisting of photoconductive layer with electrode and the electrostatic information recording medium consisting of electric charge retaining layer mounted on the electrode are provided in such manner that the surface of photoconductive layer in the photosensitive member and the surface of the electric charge retaining layer in the electrostatic information recording medium are disposed at face-to-face position. This photosensitive member and the electrostatic information retaining medium may be brought into direct contact or they may be disposed through a spacer on non-contact basis.

The photosensitive member to be used for the electrostatic information recording and reproducing method comprises an electrode provided on a support member, and a photoconductive layer is laminated on said electrode.

When the information light enters from the side of photosensitive member, it is better to have transparent support member and transparent electrode. Or, light reflection preventive film may be laminated on the opposing surface where the electrode is furnished.

It is preferable that the discharge reinforced layer is laminated on the photoconductive layer in the photosensitive member.

The photosensitive member is disposed at face-to-face position to the electrostatic information recording medium, and it is used for the electrostatic information recording and reproducing method with the incoming information light and under voltage application between both electrodes. It is provided with the function to discharge the electric charge corresponding to the information light to the electrostatic information recording medium and to accumulate it by electric charge injection. It does not have the electrostatic charge retaining property by itself.

Therefore, it is preferable that the photosensitive member has the property to discharge at high sensitivity corresponding to the information light or to inject the electric charge. For example, when the discharge reinforced layer is furnished on the photoconductive layer of the photosensitive member, electrostatic latent image is formed at low voltage and the effective external voltage can be reduced. This makes it possible to use the shutter at high speed. Even with weak incident light, the information electric charge is accumulated on the insulating layer, and the responsiveness to light is also increased. Accordingly, it is possible to record the electrostatic image on the electrostatic information recording medium at high sensitivity.

Further, a screen unit may be disposed in the optical path on a part of the photosensitive member, or a photoconductive layer cutaway portion may be formed on a part of the electrode and the electrode may be exposed to said cutaway portion of the phtoconductive layer. Or, a screen unit may be furnished on a part of electrode, and the cutaway portion of the photoconductive layer may be formed on a part of said electrode. Or, the electrode may be exposed at the cutaway portion of said photoconductive layer.

In the information light exposure and reproduction in the electrostatic information recording and reproducing method, the darkest value, i.e. fogging electric charge, can be determined and the exposure value can be adjusted by the electric charge formed on the corresponding electric charge retaining layer when the screen unit is formed.
Also, by forming a cutaway portion of photoconductive layer in the photosensitive member and by disposing the electrode surface of the photosensitive member directly to the electric charge retaining layer, the lightest value can be recorded on the corresponding electric charge retaining layer. Thus, it is possible to adjust the amplification ratio in the information reproduction and/or to use it as reference to the stability of the information potential accumulated on the electrostatic information recording medium as time elapses.

Also, it is possible to dispose a color filter on the support member of the photosensitive member or on the reflection preventive film'. The color filter may be a dyeing type color filter, a pigment type color filter, an inorganic interference type color filter, or a holographic color filter recording interference fringes of 3 primaries, and it can be arranged as stripe type, plane division type, mosaic type, etc. The color filter may be disposed separately from the support member or it may be piled up on the support member.

Next, a recording method to the electrostatic information recording medium will be described.

In the recording method, information light exposure is performed from the side of photosensitive member or electrostatic information recording medium under voltage application between two electrodes.

There are the other methods such as the method to record using an electrode needle head or an ion flow head or the method to accumulate the information electric charge directly on the electrostatic information recording medium using optical printer such as laser printer, but the preferable method is the electrostatic information recording method using the photosensitive member. In this case, electrostatic information can be recorded by disposing the surface of the electrostatic information recording medium at face-to-face position to the surface of the photoconductive layer of the photosensitive member on contact or non-contact basis.

Uniform exposure is performed on the electrostatic information recording medium by the light with the wavelength to absorb the photoconductive particles after pattern exposure. Thus, it is possible to maintain the electrostatic information at the particles and to keep the information in stable condition.

In the following, description is given of another electrostatic information recording and reproducing method in which information recorded by electrostatic information recording method is reproduced and outputted as the electrostatic charge information.

In reproducing the recording, the potential difference from surface potential at the electrode and electrostatic information recording medium can be easily determined. For example, the generated potential can be detected by electric charge induced on the detection electrode.

A guard electrode may be furnished around the detection electrode, or an insulating film may be provided on the surfaces of the detection electrode and the guard electrode.

Another method may be used, in.which the detection electrode is a long thin rod type electrode and the distribution of the potential is determined by CT technique over the surface of the electrostatic information recording medium.

There is a further method, in which the detection electrode is disposed on the electrostatic information recording medium on contact or non-contact basis and the accumulated electric charge is detected by potential or current value.

Or, the potential of electric charge may be read by the method, in which the electrostatic information recording medium is processed by toner development, the light beam is irradiated, and the reflected light is converted photoelectrically.

In one electrostatic information recording and reproducing method, the electrostatic information is converted to position information of the particles in the insulating layer and is recorded, and a mixed layer consisting of the thermoplastic insulating resin material and of the electric charge transport material to transport a part of electric charge is laminated, and the photoconductive particle layer is disposed near the surface of this mixed layer in single or multiple layers.

In this case, the particles are migrated to the interior of the insulating layer in accordance with the electric field strength by the accumulated electrostatic information, and the electrostatic information can be converted to the position information and recorded. When this electrostatic information recording medium is used in the electrostatic information recording and reproducing method, the potential generated on the surface of electric charge retaining layer at the information recording is about 200 V. The frost phenomenon occurs only slightly on the surface of the insulating layer softened at thermal development. When the information is reproduced as electric charge potential, the influence to the resolution by the irregularities of the surface can be avoided, and the reproduction at high resolution can be achieved.

In the electrostatic information recording medium of the invention as described above, a protective film may be arranged to increase the electric charge retaining property.

The protective film may be an insulating plastic film or film produced by coating of the insulating plastic solution, or the film produced by the melting transfer of the insulating melting plastics.

The electric charge recorded on the electrostatic information recording medium of this invention is gradually attenuated by moisture in the air or the like. Or, it may be destroyed by the damage from outside. To prevent this, the surface of the electric charge retaining layer may be covered by an insulating coating to preserve electrostatic information on the electrostatic information recording medium for a long period.

If no protective layer is furnished, electric charge is reduced or disappears if the surface of the electric charge retaining layer is brought into physical contact with the conductive material, whereas, if protective layer is provided, the surface potential is not reduced even when the conductive material is brought into contact. When electrostatic charge is generated on the surface of protective film by friction, it can cleaned away easily with the conductive substance such as water, and the electric charge
can be protected. In reproducing the information, the protective film may be detached and the information electric charge accumulated on the electric charge retaining layer may be reproduced, or it can be reproduced through the protective film.

As described above, the electrostatic information recording medium of this invention can accumulate analog information such as characters, line drawings, images, (0, 1) information, etc. or digital information by making it an electric charge carrying layer with high charge carrying property. Thus, the information can be permanently preserved. Information of high quality and high resolution can be accumulated because the information is accumulated in electrostatic electric charge, and it can be preserved for a long period as an electrostatic latent image.

The information memory capacity in the electrostatic information recording medium of embodiments of this invention is: 175 lines/in., 2R (4 picture elements/mesh point), i.e. 350 picture elements/in. = 14 dots/mm. Under the condition of A4 size, it is: 297 mm × 14 dots/in. x 210 mm × 14 dots/in. × 4 colors. The information quantity in the publication in A4 size is 50 MB, while the information quantity in 1 mm² of the electrostatic information recording medium of this embodiment is 1 µm × 1 µm. If one picture element has 256 gradations (The information quantity of one picture element = 1B) (analog recording), it is 1000 picture elements x 1000 picture elements with the information density of 1 MB/mm². Accordingly, for 1 cm² of the electrostatic information recording medium, it is possible to enter the information as much as a color publication with 175 lines in A3 size. Compared with the information density of 3 × 10³ bit/cm² of a 8-inch 1 MB floppy disk, 10⁶ bits/cm² of a high density floppy disk, 7.5 × 10⁶ bits/cm² of a digital audio tape (DAT) and 2 × 10⁸ bits/cm² of an optico-magnetic disk, the information density of the electrostatic information recording medium of this invention is as high as 8 × 10⁸ bits/cm².

Because the accumulated information can be obtained at any scanning density by reading and outputting the local potential of the electrostatic latent image at any desired time, an image of high image quality can be obtained in exactly the same way as in silver salt photographing and in reproducing it by optical scanning. Since physical or chemical means such as the development means is not required for the direct potential detection, inexpensive and convenient recording and reproducing system can be actualized.

In embodiments of the electrostatic information recording medium of this invention, audio information can also be recorded at the same time.

In these embodinents a part of the information recording region of the electrostatic information recording medium is allocated for audio information recording, and audio information may be recorded. In an electrostatic information recording method, voice and sound can be converted to optical information and recorded, and this audio information recording region is disposed on the periphery of the electrostatic information recording medium. Accordingly, the electrostatic information recording medium is provided with audio information recording region in addition to the information recording region for characters, line drawings, images, codes and (1, 0) information.

Also, the electrostatic information recording medium according to the present invention can be formed as an electrostatic information recording card by laminating it on the card base material such as the prepaid card, credit card, etc. In this case, the surface of the electric charge retaining layer is exposed and embedded in the card base material or laminated by attaching on the card base material.

In laminating it on the card base material, it may be laminated on the electrostatic information recording medium with or without the recorded information, or the recording form of information may be electric charge or the toner by toner development. To record the information after it is formed in the form of a card, a part of the electrode of the electrostatic information recording medium is to be exposed from appropriate point of the card base material and to'connect it with the electrode of the photosensitive member. This makes it possible to record the information not only in case the medium with the recorded information is turned to the card form but also in case the electrostatic recording medium without the recorded information is turned to the card form and the information can be recorded on it. In this case, protective film may be detachably laminated on the electric charge carrying layer, or the protective film may be formed in thin film and recording may be made through the protective film. Especially, when digital information such as (0, 1) information is recorded by scanning through beam irradiation, the recorded electric charge can be preserved as it is or by toner development, and it is possible to display it on CRT by the potential reading means or by the reproducing means or to output it on printer. Also, it is possible to utilize the reading means, which is used for optical card.

### BRIEF DESCRIPTION OF THE DRAWINGS

Fig. 1 is a cross-sectional view of an electrostatic information recording medium,
Fig. 2 is a perspective view of various types of flexible electrostatic information recording medium,
Fig. 4 is a cross sectional view of another electrostatic information recording medium,
Fig. 5 is a cross-sectional view of an electrostatic information recording medium of this invention,
Fig. 7 is a cross-sectional view of a photosensitive member used in an electrostatic information recording and reproducing method,
Fig. 8 and Fig. 9 are the cross-sectional views of the other photosensitive members used in an electrostatic information recording and reproducing method,
Fig. 10 is a schematical drawing of an electrostatic information recording apparatus to be used in an electrostatic information recording and reproducing method,
Fig. 11 is a drawing to show approximate configuration when the electrostatic information recording apparatus is used as an electrostatic camera,
Fig. 12 is a drawing giving the configuration of color-separating optical system,
Fig. 13 is an explanatory view of the case where color electrostatic latent image is formed,
Fig. 14 is a drawing illustrating an example of the fine color filter,
Fig. 15 is a drawing showing an example, in which the fine color filter and a Fresnel lens are combined together,
Fig. 16 is a drawing giving 3-plane division by the simultaneous use of ND filter and the filters for R, G and B,
Fig. 17 is a drawing illustrating an embodiment of the manufacturing method of holographic color filter,
Fig. 18, Fig. 19 and Fig. 20 are the drawings showing the reproduction method of holographic color filter of Fig. 17,
Fig. 21 is a drawing illustrating another embodiment of the method to prepare the holographic color filter,
Fig. 22, Fig. 23 and Fig. 24 are the drawings showing the reproduction method of holographic color filter of Fig. 21,
Fig. 25 is a drawing illustrating the exposure method by divergent and convergent lights,
Fig. 26 is a drawing illustrating a further embodiment of the method to prepare the holographic color filter,
Fig. 27 and Fig. 28 are the drawings illustrating the reproduction method of the holographic color filter prepared in Fig. 26,
Fig. 29 is a drawing showing an embodiment using Venetian blind,
Fig. 30 is a drawing giving another embodiment of the method to prepare the holographic color filter,
Fig. 31 is a drawing illustrating the reproduction method of holographic color filter of Fig. 30,
Fig. 32 is a drawing illustrating an example applying an electrostatic information recording and reproducing method,
Fig. 33 is a drawing to explain an electrostatic information recording and reproducing method,
Fig. 36 and Fig. 37 are the drawings to explain the electrostatic information recording method for the electrostatic information recording medium of this invention,
Fig. 38 and Fig. 39 are the drawings to explain the information recording method to the electrostatic information recording medium according to the present invention, in which the electrostatic information is converted to position information,
Fig. 40 is a drawing to explain the information reproducing method in the electrostatic information recording medium of this invention, in which the electrostatic information is converted to position information,
Fig. 41, Fig. 42 and Fig. 43 are the drawings to illustrate the potential reading method of DC amplifying type,
Fig. 44, Fig. 45 and Fig. 46 are the drawings showing the examples of the potential reading method of AC amplifying type,
Fig. 47 and Fig. 48 are the drawings illustrating the examples of the potential reading method by CT scanning method,
Fig. 49 is a drawing to give an example of the potential reading method of power collecting type,
Fig. 50 is a drawing to show an example of the potential reading method of electron beam type,
Fig. 51 and Fig. 52 are the drawings to explain the potential reading method utilizing the toner coloring,
Fig. 53 is a drawing to show approximate configuration of the'electrostatic image reproduction of this invention,
Fig. 54 is a schematical cross-sectional view of the electrostatic information recording medium equipped with protective film by the present invention,
Fig. 55 is a drawing to show the electrostatic information recording medium of the present invention, in which audio and image information is recorded,
Fig. 56 and Fig. 57 are the drawings giving the memory region for the image information and audio information,
Fig. 58 and Fig. 59 are the drawings illustrating the method to record audio information together with image information to the electrostatic information recording medium of this invention,
Fig. 60 is a drawing to illustrate another recording method using cyclic memory,
Fig. 61 and Fig. 62 are the drawings to show the electrostatic information recording card of this invention,
Fig. 63 is a drawing to explain the electrostatic information recording method to the electrostatic information recording card of this invention,

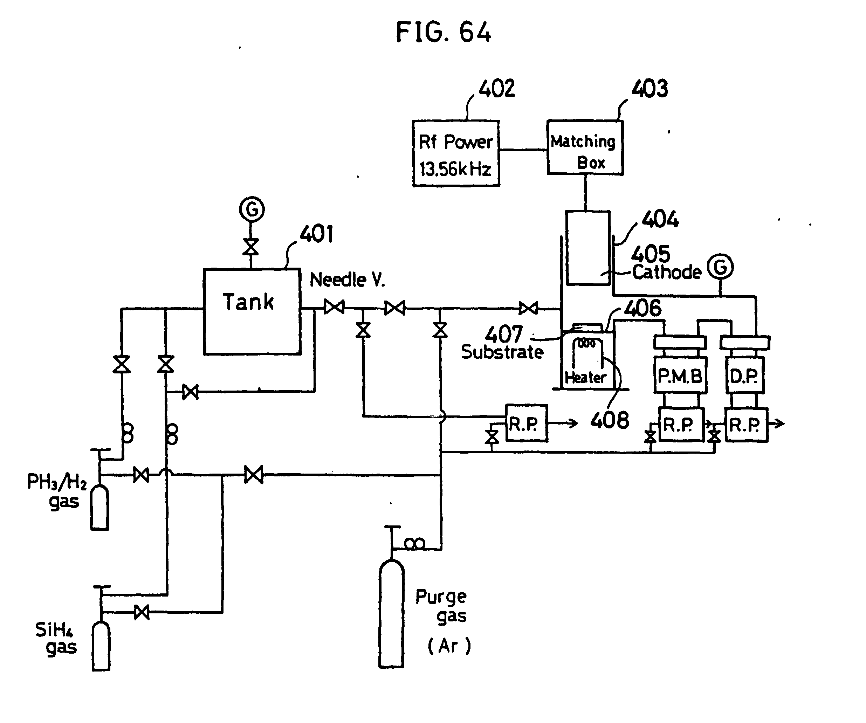

Fig. 64 is a drawing to show the relationship between glass transition temperature and the electric charge carrying ratio when various types of polyester resin are used as electric charge carrying layer,

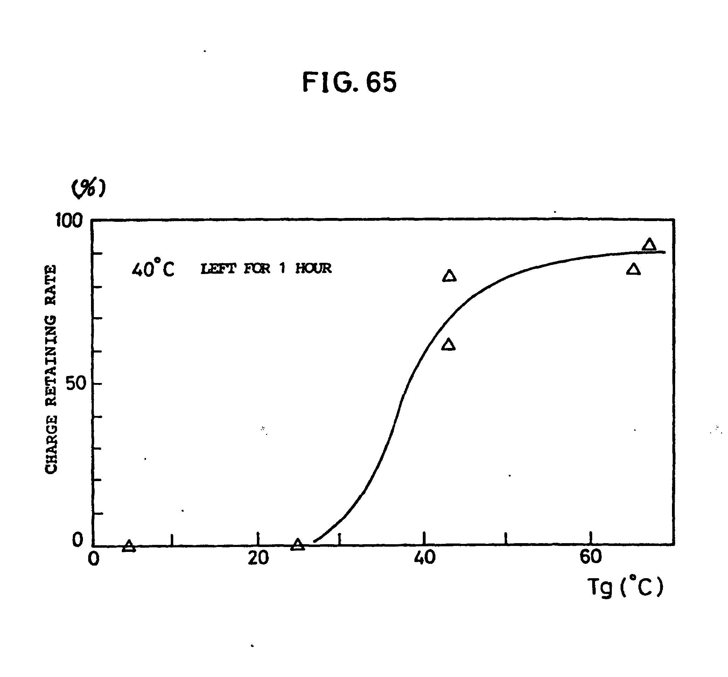

Fig. 65 is a drawing to explain the method to prepare a-Si: H photosensitive member,

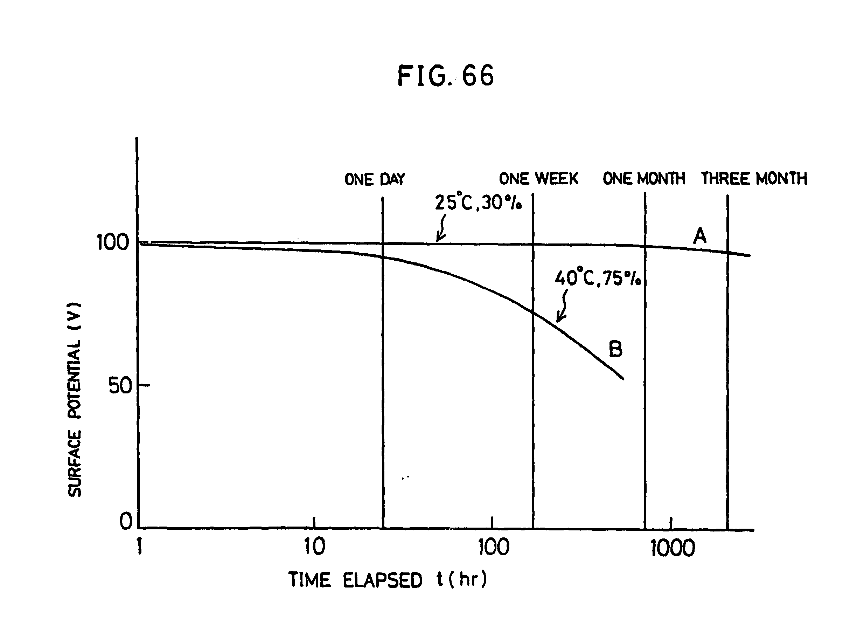

Fig. 66 is a drawing to show electric charge carrying property of the electrostatic information recording medium prepared by Example 10 (a), and

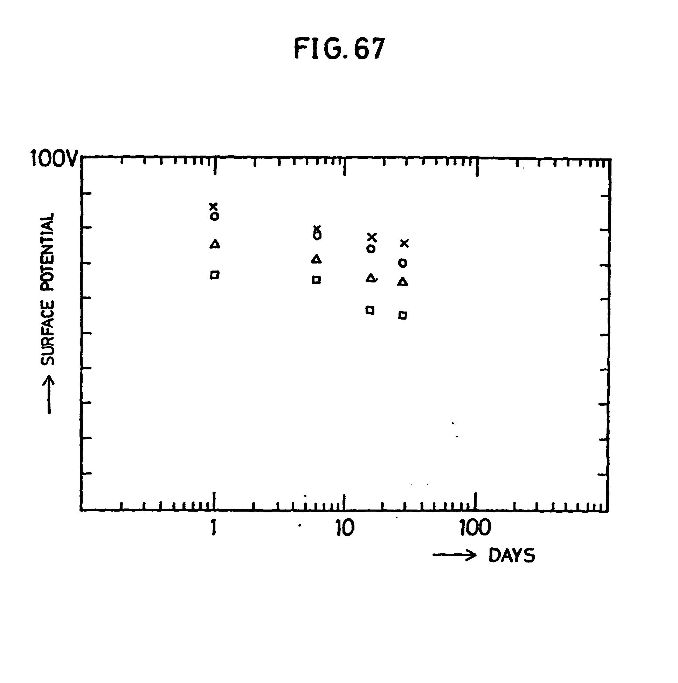

Fig. 67 is a drawing to show electric charge carrying property of the electrostatic information recording medium with the protective film prepared by Example 74.

### DESCRIPTION OF THE PREFERRED EMBODIMENT

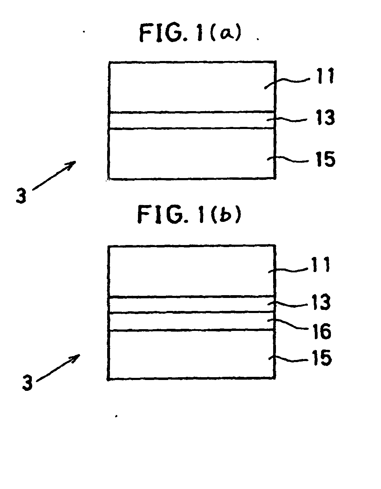

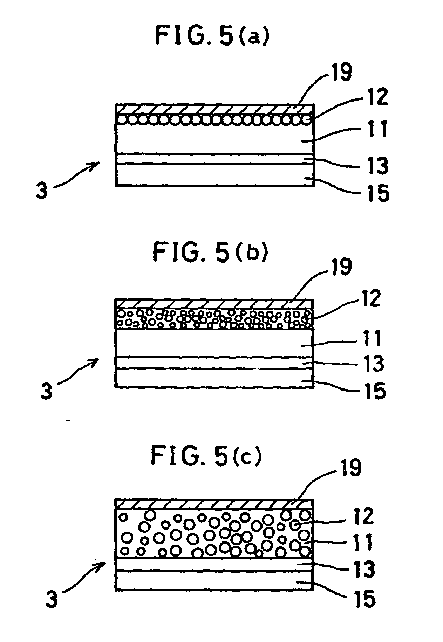

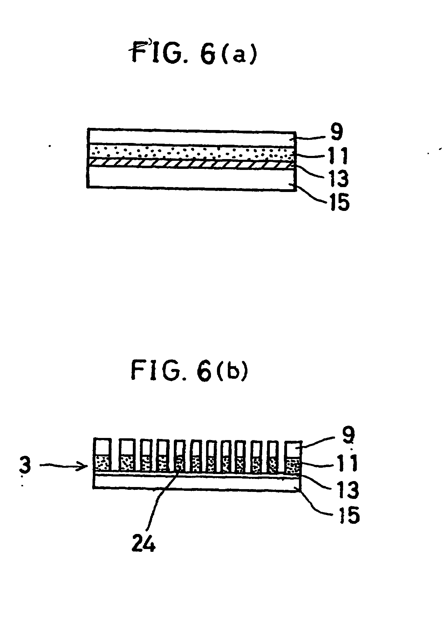

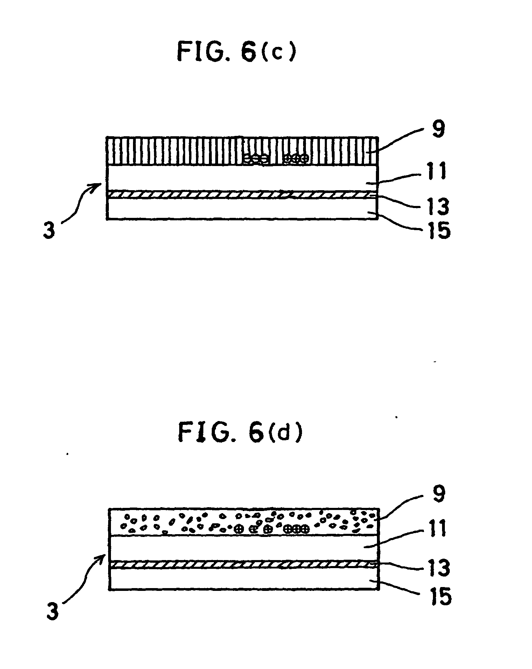

Figures 1, 2 and 4 show electrostatic information recording mediums which do not fall within the scope of the claims. The description is nevertheless included to aid in understanding the claimed invention which is illustrated in Figure 5.

The electric charge retaining layer consists of macromolecular material with high insulating property to suppress the migration of electric charge, and it must have specific resistance of 10¹² Ω.cm or more.

As the macromolecular material to constitute the electric charge carrying layer, it is essential that glass transition temperature is higher than the operating environmental temperature. The glass transition temperature is greater than 20° and preferably less than 100°C.

As the macromolecular material to constitute the electric charge retaining layer, it is necessary that the water absorption ratio is lower than 0.4% to prevent the leakage of the accumulated information electric charge by the influence of humidity.

As such macromolecular materials, thermoplastic resin, thermosetting resin, ultraviolet setting resin, electron beam setting resin or engineering plastics can be used.

As thermoplastic resin, the following compounds may be used: Polyethylene, vinyl chloride resin, polypropylene, styrene resin, ABS resin, polyvinyl alcohol, acryl resin, acrylonitrile-styrene resin, vinylidene chloride resin, AAS (ASA) resin, AES resin, cellulose derivative resin, thermoplastic polyurethane, polyvinyl-butyral, poly-4-methylpentene-1, polybutene-1, rosin ester resin, etc. Further, fluorine resin, e.g. polytetrafluoroethylene, ethylene-propylene fluoride, tetrafluoroethylene-perfluoro-alkylvinylether copolymer, and the dispersion types or degenerated type (coating type) of these compounds, or polyether-ketone resin, polyparaxylylene expressed by the following structural formulae:

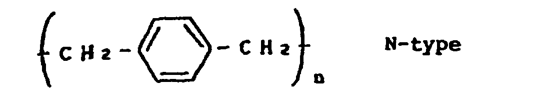

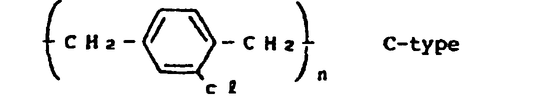

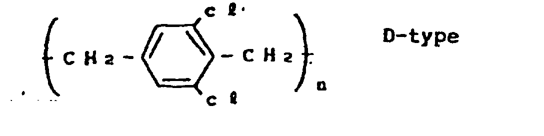

(C-type as described above may be, in addition to the compounds of the above structure, the compounds, in which one of the sites other than the main chain bonding site in benzene ring is substituted by chlorine, or D-type may be the compound, in which two of such sites are substituted by chlorine.)

As thermosetting resin, the following compounds can be used: Unsaturated polyester resin, epoxy resin, phenol resin, urea resin, melamine resin, diallyl phthalate resin, silicone resin, etc.

As energy ray setting resins such as ultraviolet setting resin, electron beam setting resin, etc., there are radical polymerized acrylate compounds, e.g. ester compounds of acrylate, metacrylate or their derivatives and having hydroxyl groups on both ends, e.g. hydroxyethyl acrylate, hydroxypropyl acrylate, hydroxybutyl acrylate, hydroxyethyl metacrylate, hydroxypropyl metacrylate, hydroxybutyl metacrylate, 4-hydroxy-cyclohexyl acrylate, 5-hydroxy-cyclooctylacrylate, 2-hydroxy-3-phenyloxypropyl acrylate, (meta) acrylic acid ester compound having one polymerized unsaturated group, and the compound having two polymerized unsaturated groups expressed by the following formula:

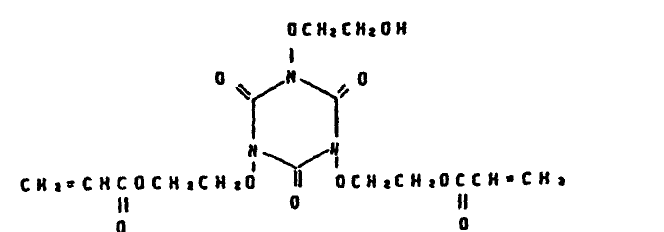

As the setting compounds having two hydroxyl groups and one or two or more radical polymerized unsaturated groups, glycerol metacrylate or the acrylates expressed by the formula: 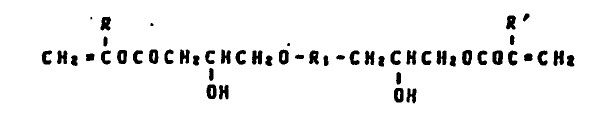 may be used. (Here, R and R' refer to methyl group or hydrogen, and R₁ to short-chain diol residual group such as ethyleneglycol, propylene glycol, diethyleneglycol, butanediol, 1, 6-hexanediol, etc.

As engineering plastics, polycarbonate, polyamide, acetal resin, polyphenyleneoxide, polybutylene terephthalate, polyethylene terephthalate, polyethylene naphthalate, polyphenylene sulfide, polyimide resin, polysulfone, aromatic polyester, polyacrylate, etc. can be used.

In the resins as described above with high water absorption ratio, the absorption ratio can be decreased by introducing the atoms or substituents furnished with water non-absorbing property. Or, such resin may be used by mixing with the resin with lower water absorption ratio. The materials with high water absorption ratio such as polyether sulfone, polyimide, polyparabanic acid, etc. can be used by laminating the protective film of the resin with lower water absorption ratio.

As the laminating method of electric charge retaining layer, there are the methods to laminate the layers by depositing resin or rubber on the electrode 13 by vacuum evaporation, by coating or dippingor by sputtering in case of electrostatic information recording medium as shown in Fig. 1 (a).

For the electric charge retaining layer, silicon film, polyester film, polyimide film, fluorine-containing polymer film, polyethylene film, polypropylene film, polyparabanic acid film, polycarbonate film, polyamide film, etc. may be bonded with bonding agent to form the laminate layers. Or, the electrode layer may be formed on one side of the film by vacuum evaporation, sputtering or coating. In this case, the layer to protect the electrode layer may be provided. If mechanical strength is required, the film or the like with higher mechanical strength may be bonded with it.

The electrode 13 is laminated on the support member 15 as shown in Fig. 1 (a) or on the support member 15 as shown in Fig. 1 (b) through the bonding layer 16, and there is no restriction of the material except that it must have specific resistance of 10⁶ Ω·cm or less. It should be inorganic metal conductive film, inorganic metal oxide conductive film, or organic conductive film such as tertiary ammonium salt. Such electrode of electrostatic information recording medium is formed on the support member by various methods such as vacuum evaporation, sputtering, CVD, coating, metalplating, dipping, electrolytic polymerization, etc. It is necessary to change the film thickness according to electrical property constituting the electrode or by the applied voltage at the recording of information. For example, it is 100 - 3000 Å in case of aluminum, and it is determined according to the pattern of the total surface between the support member and the electric charge retaining layer or to the pattern of the electric charge retaining layer.

The support member 15 is to support the electrostatic information recording medium 3, and there is no restriction to its material and thickness, provided that it has the strength enough to support the electric charge retaining layer. For example, flexible plastic film, metal foil, paper or rigid substances such as glass, plastic sheet, metal plate (also to be used as electrode) may be used, and light transmission property is also required. Actually, when the electrostatic information recording medium 3 takes the form of flexible film, tape or disk, the flexible plastic film is used. In case higher strength is required, inorganic material with rigidity such as sheet, glass, etc. are used.

In case light transmission property is required, an anti-reflection film may be provided or the film thickness of electrode layer or electric charge retaining layer may be adjusted, or the reflection protective effect may be given by combining both.

The electrostatic information recording medium 3 is to record the information on the electric charge retaining layer 11 as the distribution of electrostatic charge. Therefore, the electrostatic information recording medium may take various forms according to the information to be recorded or the recording method. For example, when it is used for electrostatic camera, it takes the form of normal film (for single frame or continuous frame) or disk. When digital information or analog information is recorded by laser or the like, it takes the form of tape, disk or card.

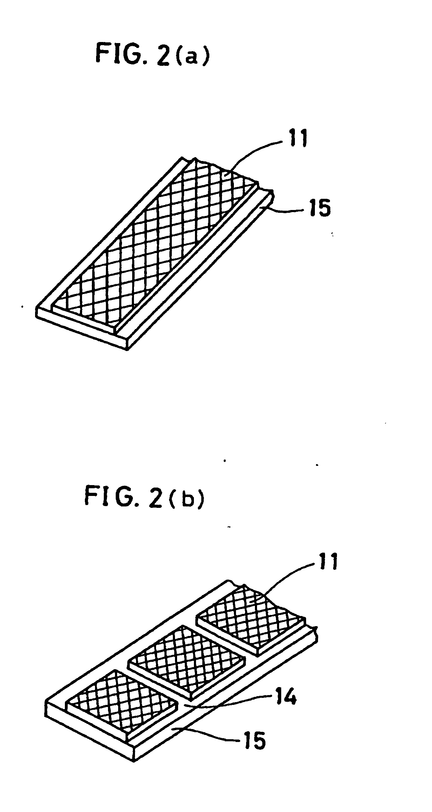

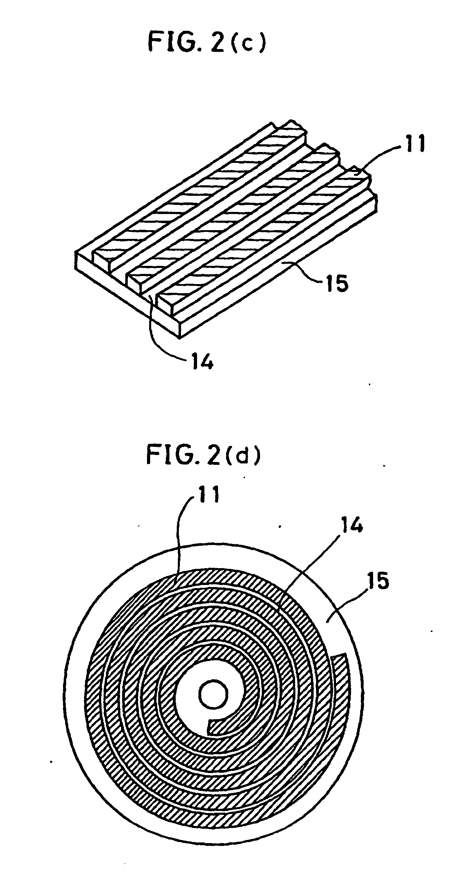

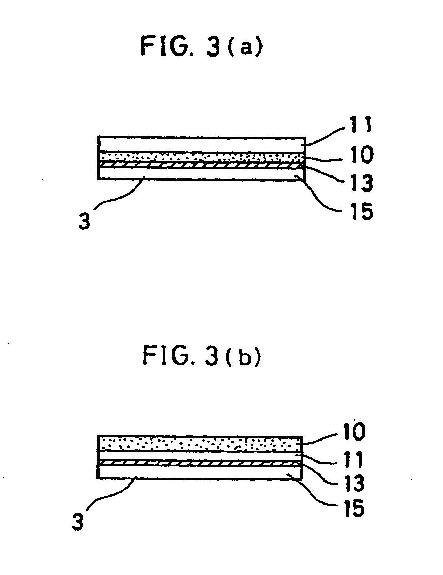

In the following, description is given for the case where the electrostatic information recording medium 3 takes the form of flexible film, tape or disk. Fig. 2 (a) shows a type of the medium, in which the recording portion, i.e. the electric charge retaining layer 11, is continuous.

This is formed by providing the electric charge retaining layer on the support member such as plastic film equipped with the electrode layer, leaving only both edges of it. This electrostatic information recording medium has the length at least longer than that of one picture to be recorded (e.g. one frame in case of camera photographing, or track width in case of digital information recording). Naturally, this includes the combination or bonding of two or more electrostatic information recording media in longitudinal direction. In this case, there may be a slit zone between the adjacent electric charge retaining layers, where the retaininglayer is partially lacking.

On the other hand, there is discontinuous type, as shown in Fig. 2 (b), where the electric charge retaining layer 11 is discontinuous in longitudinal direction.

This is formed by providing the electric charge retaining layer discontinuously on the support member such as plastic film in longitudinal direction, leaving both edges of the support member or without leaving them. On the support member, two or more electric charge retaining layers are formed in a certain size. The size of the electric charge retaining layer differs according to the image or the exposure method of the information input unit. In case of camera photographing, it is 35 mm × 35 mm, and it is the track width of the digital information recording in case of the spot input such as laser beam. In case of digital information recording, the cutaway portion of the electric charge retaining layer formed between the adjacent electric charge retaining layers can be utilized as the tracking zone for input/output of the information. Naturally, this includes the combination or bonding of two or more electrostatic information recording media in longitudinal direction. In such case, there may be a slit zone between the adjacent electric charge retaining layers, lacking a part of it.

As shown in Fig. 2 (c), there is the case where the electric charge retaining layer is discontinuous to lateral direction.

In such case, the electric charge retaining layer is formed discontinuously in lateral direction on the support member such as plastic film equipped with electrode layer, leaving both edges of the support member or without leaving them. Thus, two or more band-like electric charge retaining layers are formed on the support member. The width of the electric charge retaining layer is equal either to the track width of digital information to be recorded or to the width multiplied by integral number, and the cutaway portion of the electric charge retaining layer formed between the adjacent electric charge retaining layers is utilized as the tracking zone for input/output of the information.

As shown in Fig. 2 (d), there is also a disk type.

In this case, the electric charge retaining layer is provided totally on the support member such as circular plastic film equipped with electrode layer either totally or leaving spiral cutaway portion of continuous spiral electric charge retaining layer. In such electrostatic information recording medium, circular cutaway portion may be formed for the driving of input/output device. In case of digital information recording, the cutaway portion of the electric charge retaining layer in continuous and spiral form can be used as the tracking zone for input/output of the information.

Next, description is given of another electrostatic information recording medium, not falling within the scope of the claims.

In this case, the electric charge retaining layer of the electrostatic information recording medium is formed by single mono layer or built-up layers

Because LB film 11 is to record the information on its surface or in the interior as the distribution of electrostatic charge, high insulating property is required to suppress the migration of electric charge and must have the insulating property of 10¹² Ω·cm or more in specific resistance.

As the organic compounds forming the mono layer or built-up layers, the organic compounds capable to form LB film with specific resistance of 10¹² Ω·cm or more, e.g. carbonic acids, amines, alcohols, silicon compounds, phosphoric acid derivatives, sulfonic acids, cellulose derivatives, polymers, etc. can be used.

As the carbonic acids, for example, there are tetradecyl benzoate, 2-nitro-5 (N-methyl) aminobenzoate, 2-nitro-5 (N-octadecyl) aminobenzoate, vinyl stearate, β-parinallic acid, trans-13-docosenoic acid,ω-tricosenic acid, glycine-octadecyl alcohol ester, 2,4-octadecadienic acid, octadecyl fumaric acid, octadecyl maleic acid, ω-tricosenic acid, perfluorodecanic acid, perfluorononaic acid, perfluorooctanic acid, perfluoro-heptanic acid, cartinonic acid, 2-hexadecanic acid, n-octadecyl-acrylate, vinyl stearate, octadecyl acrylate, glycine octadecyl ester, alanine octadecylester, 2-lysine, and the substances having the following structural formulae:

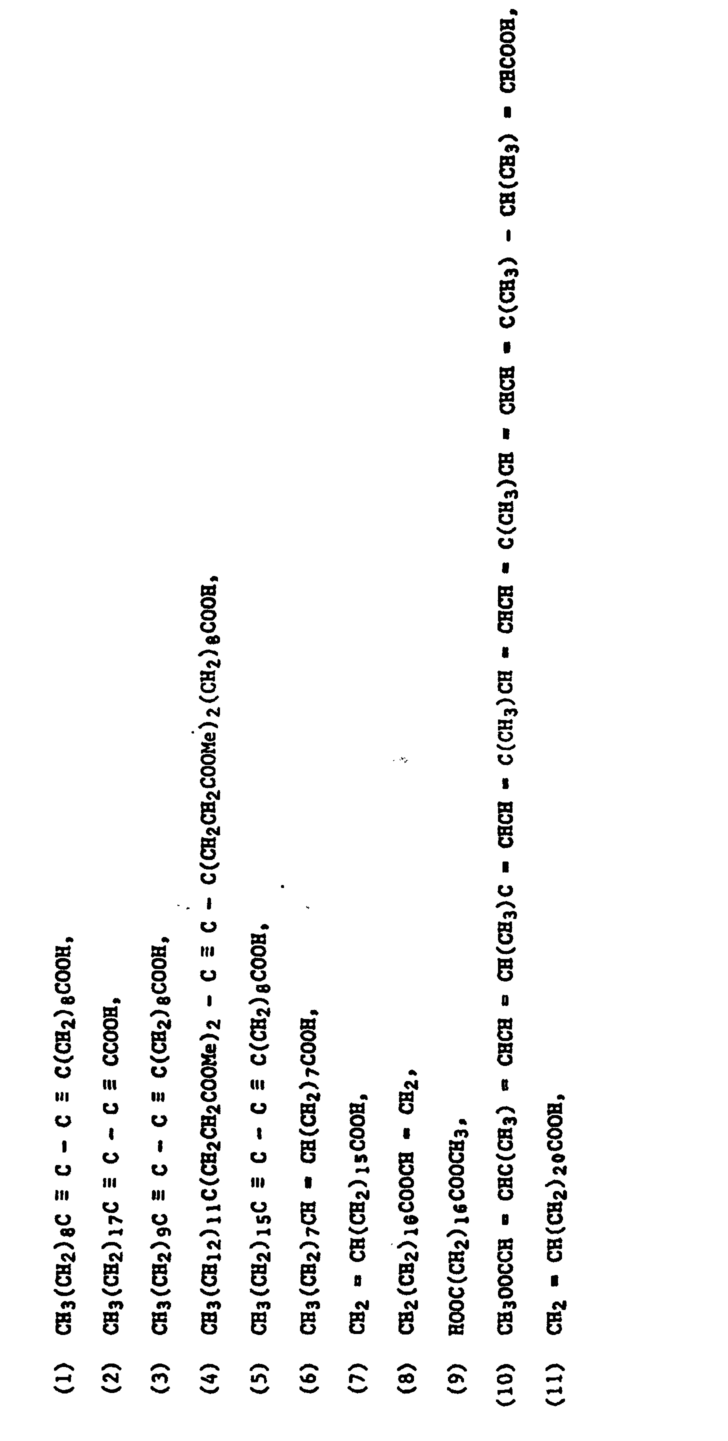

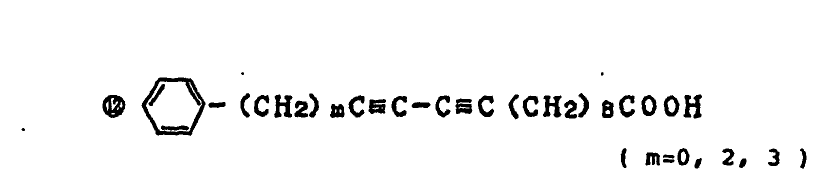

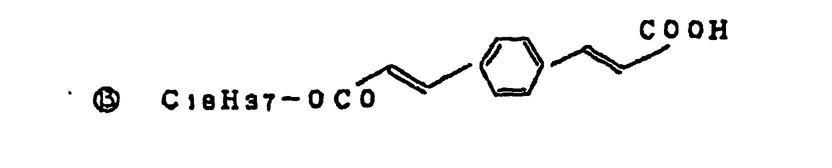

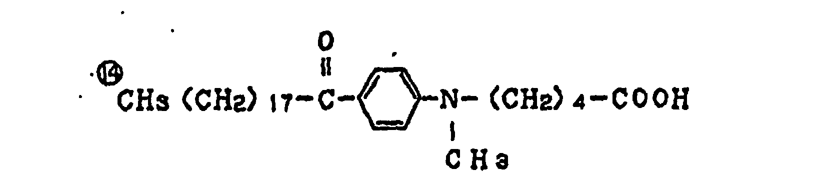

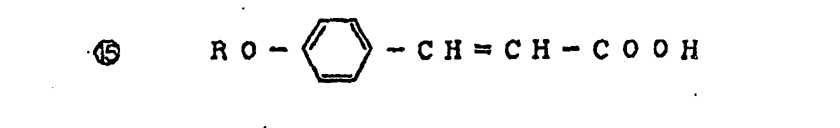

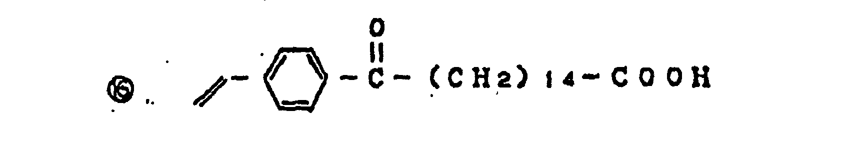

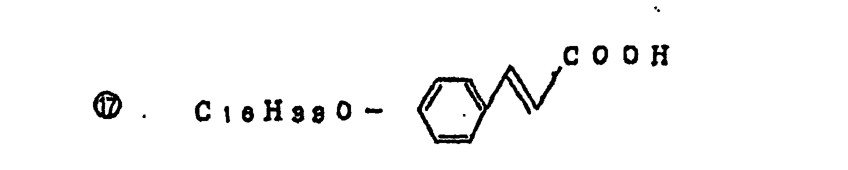

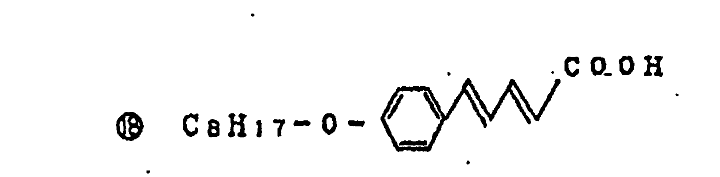

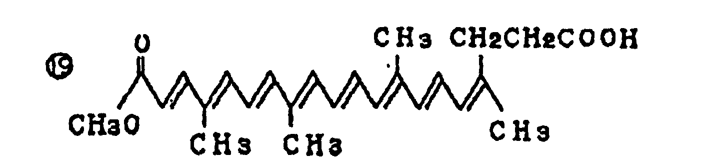

Of the carbonic acids as described above, its salt also can be used if the substance is acid.

As the phosphate derivatives, the following substances can be used: Distearoyl-phosphatidyl-choline, dipalmitoyl-phosphatidylcholine, cholesterol, 1-palmitoyl-2-oleyl-SN-glycel-3-phosphacholine, L-α-dimyristyl-phosphatidic acid, L-α-dilauryl-phosphatidic acid, DL-α-dimyristoyl-phosphatidyl-ethanolamine, DL-α-dilauryl-phosphatidylcholine,DL-α-dipalmitoyl-nitrobenzoxadiazole-phosphatidylethanolamine, dioleoyl-phosphatidylcholine, dipalmitoyl-lecithine, dimyristyl -lecithine, dipalmitoyl-phosphatidylethanolamine, dipalmitoyl-phasphatidylethanolamine, dipalmitoyl-phosphatidylcholine and the substances expressed by the following structural formula:

CH₃(CH₂)₁₇OPO(OH)₃

As the cellulose derivatives, the following substances can be used: Cellulose triacetate, cellulose tricaprylate, cellulose tricaprate, cellulose trilaurate, cellulose dilaurate, and cellulose tripalmitate. As the polymers, there are: Poly-1-benzyl-L-histidine, poly-γ-benzyl-1-glutamate, polyoctadecyl-metacrylate, polyoctadecyl-acrylate, polymethyl-metacrylate, poly-γ-methyl-L-glutamate, polyimide, poly (n-octadecylvinylether/maleic acid anhydride), poly (octadecene-1/maleic acid anhydride), poly (styrene/maleic acid anhydride), poly-γ-methyl-L-glutamate, polystyrene, and the substances expressed by the following formulae:

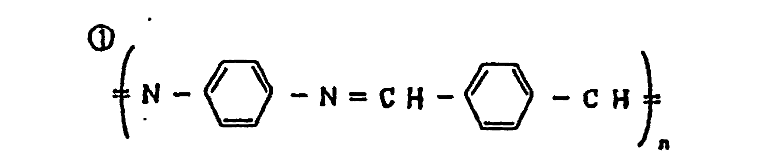

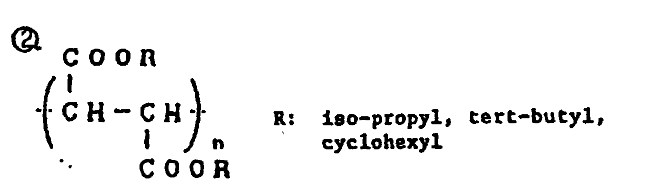

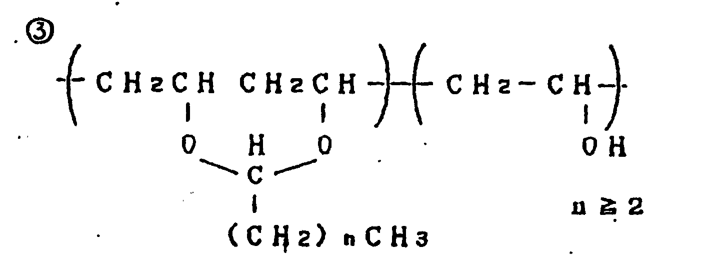

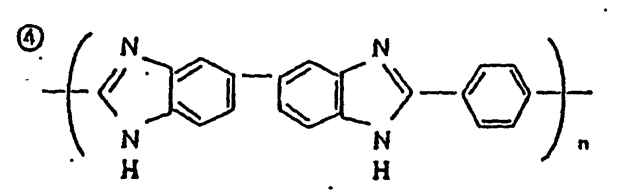

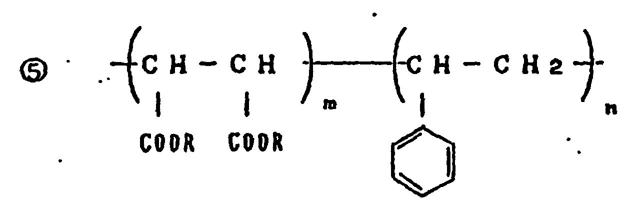

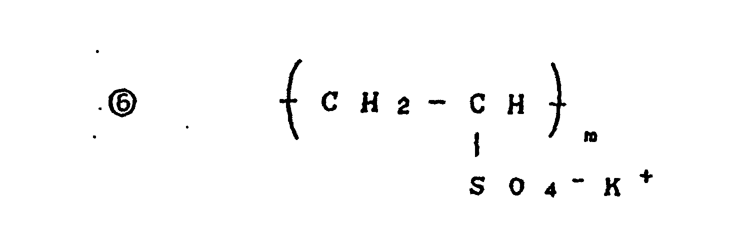

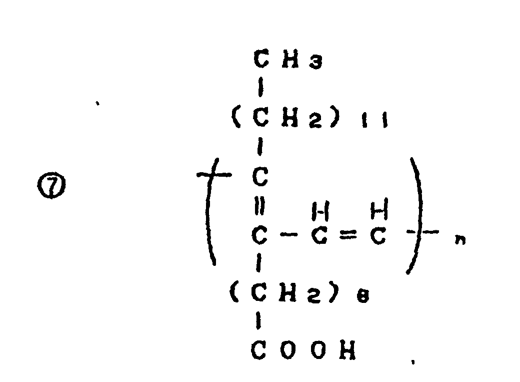

As cyloxanes, the substances given by the following formulae can be used:

① CH₃(CH₂)₁₇Si(Cl)₃,

② CH₃(CH₂)₁₇Si(OH)₃,

③ CH₃(CH₂)₇CH=CH(CH₂)₇Si(Cl)₃,

④ CH₃(CH₂)₇CH=CH(CH₂)₇Si(OH)₃,

⑤ CH₂OCO-(CH₂)₂₂Si(Cl)₃,

⑥ CH₃OCO-(CH₂)₂₂Si(OH)₃,

Or the substances expressed by the following structural formula can be used:

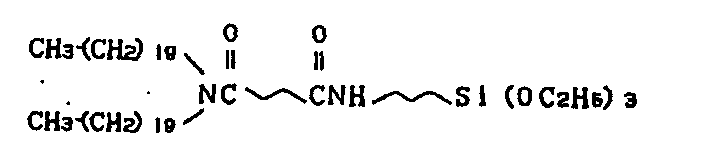

In addition, the substances given by the following structural formulae can be used:

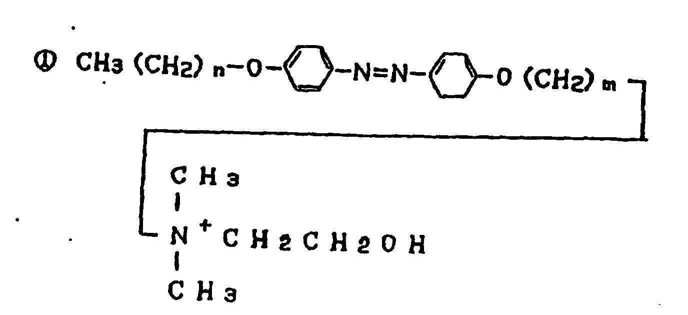

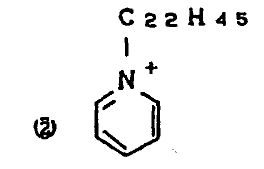

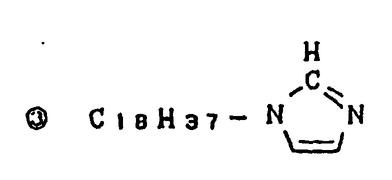

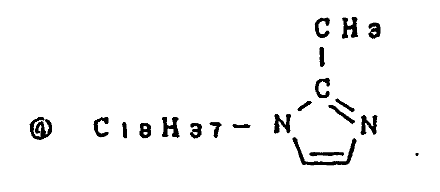

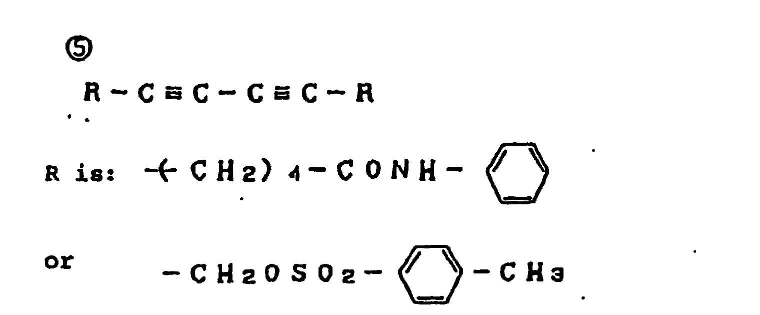

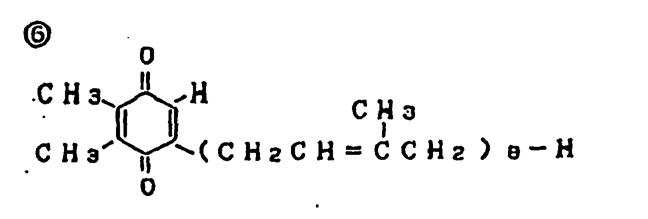

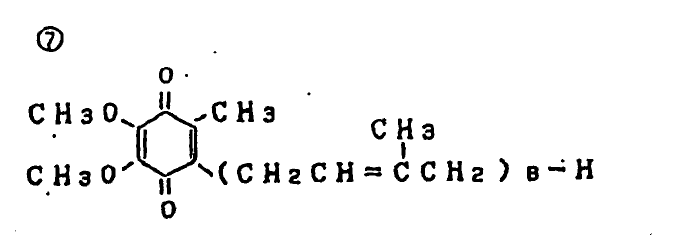

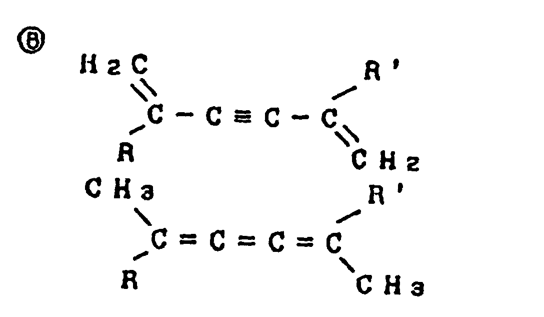

R and R' as described above are:

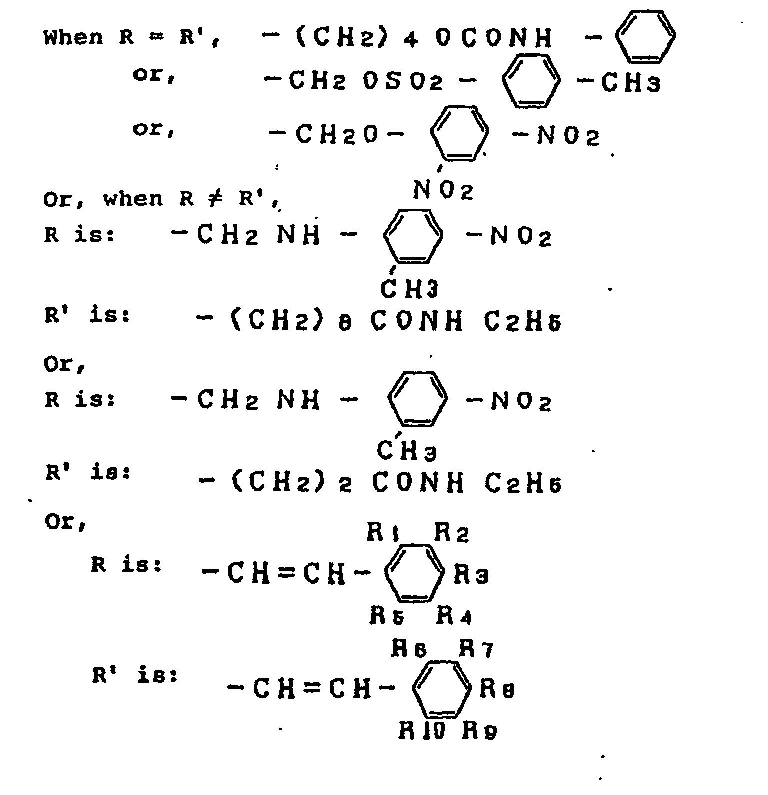

To form mono layer on the electrode surface, the solution of the above compounds in organic solvent is dropped onto water by Langmuir-Blodgett's method to deposit and form mono layer on aqueous phase. Thus, the following substances can be used: The substances formed by shifting the mono layer to the surface of clean electrode under the constant superficial pressure when monomolecules are lined up along the interface, the substances formed by immersion of electrode plate in the solution such as silane coupling agent already known and used for chemical combination of organic polymer and inorganic material, and the substances formed by the known means to form mono layer film such as the deposition of organic compounds on the surface of the electrode and the adsorption of the mono layer The thickness of mono layer is the size of the constituent molecule, i.e. about 20 - 100 Å. In case of built-up layer, the layers thickness is a multiple of the thickness of mono layer corresponding to the cumulative frequency.

In forming the mono layer or built-up layers by LB method, it is formed, for example, by general means as described in "The New Experimental Chemistry Course: Vol. 18; Interface and Colloids", pp. 498 - 507 (Maruzen). As the method to align monomolecules in the built-up layers,there are the method to adsorb the lipophilic group on electrode surface, the method to adsorb the hydrophilic group on electrode surface, or the method to laminate on these monomolecular films from the side of lipophilic group or from hydrophilic group (the so-called, X, Y or Z-type).

The above polymers without hydrophilic group can be formed by placing LB film on the baseplate. In case of polystyrene, for instance, it is dropped on water surface and mono layer is formed, and the attached baseplate is brought into contact with water surface in parallel.

Next, description is given of another electrostatic information recording medium useful for understanding the invention.

The particles to store the electric charge are composed of photoconductive materials and electrically conductive materials. As to materials for the photoconductive particles, there are inorganic photoconductive materials such as amorphous silicon, crystal silicon, amorphous selenium, crystal selenium, cadmium sulfide, zinc oxides, and organic photoconductive materials such as polyvinylcarbazole, phthalocynaine, azo pigment etc. or triphenylmethane, pyrylium salt, xanthene or basic dyes are used.

As to the electrically conductive materials, the following elements are used in fine powder: I A group (alkali metals) in periodic table, I B group (copper group), II A group (alkali earth metals), II B group (zinc group), III A group (aluminum group), III B group (rare earth metals), IV B group (titanium group), V B group (vanadium group), VI B group (chromium group), VII B group (manganese group), VIII group (iron group and platinum group), carbon, silicon, germanium, tin and lead as IV A group (carbon group), antimony and bismuth as V A group (nitrogen group), and sulfur, selenium and tellurium as VI A group (oxygen group).

Of the above elements, the metals can be used in the form of fine powder alloy, organic metal or complex. Further, they can be used in the form of oxides, phosphates, sulfonated compounds or halogenated compounds. Above all, carbon, gold, copper, aluminum, etc. are preferably used.

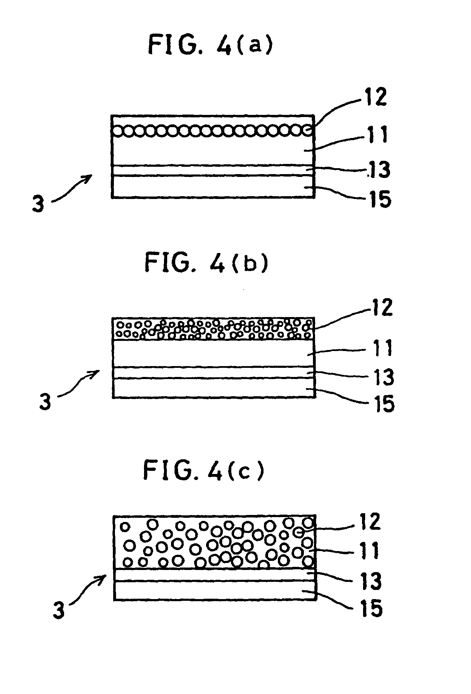

Next, the method to form the particle layer is described. First, the electrostatic information recording medium as shown in Fig. 4 (a) is formed by depositing the particle layer forming materials on the resin layer 11, which is in unhardened molten or softened conditions and is laminated on the support member, by means of a vacuum evaporation unit of low vacuum.

When vaporized under low vacuum condition of 10 Torr - 10⁻³ Torr, the particle layer forming material is aggregated and is turned to fine particles of 10 - 0.1 µm. If the resin layer is softened by heating during vacuum evaporation, the particles 12 are laminated in arranged conditions in single layer or multiple layers. If the resin layer is made of thermoplastic resin, the resin layer is softened by heating the electrode layer by resistance heating or it is softened by directly heating the baseplate by heater. If the resin layer is made of thermosetting resin, ultraviolet setting resin or electron beam setting resin, the particle layer forming material is deposited by vacuum evaporation in the unhardened condition and it is hardened by appropriate hardening means after the particle layer is formed.

There is another method to form the fine particle layer 12 in the vicinity of the interior surface of the resin layer. By this method, the particle layers 12 are deposited on the support member, which is formed by hardening said resin layer on the electrode baseplate in advance, in single layer or in multiple layers by vacuum evaporation. In this case, the particle layer is formed in the vicinity of the interior surface of the resin layer. Then, the same resin as the resin used for the formation of said resin layer or the different insulating resin is laminated within the range of 0.1 µm - 30 µm. As the laminating methods, there are the dry methods such as vacuum evaporation or sputtering to directly form the resin layer, or the wet methods, by which, resin is first dissolved by solvent, and, after forming the film by spinner coating, dipping, blade coating, etc., the solvent is dried up. To ensure the uniform particle size during the formation of the particle layer, the baseplate may be heated up to the temperature, at which the resin layer is not melted.

The resin layer 11 and the particle layer 12 are sequentially laminated on the support member as shown in Fig. 4 (b). To attain this, the particle layer forming material in fine particles is dispersed in the resin layer forming material by adding the suitable hardening agent and solvent, and this is coated on the resin layer 11, formed on the support member in advance, by coating and dipping.

Further, the material to form the particle layer 12 in fine particles is dispersed in the resin layer 11 as shown in Fig. 4 (c). To form this, the particle layer forming material is dispersed in the resin layer forming material by adding the suitable hardening agent and solvent and by coating it on the support member by coating and dipping.

Next, description is given of an electrostatic information recording medium of this invention, illustrated in Figure 5. In this electrostatic information recording medium the electric charge transport layer 19 is laminated on the electric charge retaining layer of the electrostatic information recording medium shown in Fig. 4.

The electric charge transport layer 19 is provided with the function to primarily transport the electric charge on one side. As the materials to form the hole transport layer, the electric charge transport material can be used, which is formed by dispersing the following substances into resin: Amorphouse silicon, amorphous selenium doped with B, Al, Ga, In, etc. or oxadiazole, pyrazoline, hydrazone, polyvinylcarbazole, stilbene, anthracene, naphthalene, tridiphenylmethane, triphenylmethane, azine, amine, aromatic amine, etc.

As the materials to form the electron transport layer, the following substances can be used: Amorphous silicon doped with P, N, As, Sb, Bi, etc. or ZnO, polyvinylcarbazole-trinitro-fluorene electric charge migration complex.

To laminate the electric charge transport material, there is the dry method to form the electric charge transport layer directly on the fine particle layer by vacuum evaporation, sputtering method, etc. or the wet method to dissolve or suspend the photoconductive material in solvent and, after forming the film by spinner coating method, the solvent is dried up. The material may be laminated with the thickness of 0.5 µm - 50 µm. If film thickness is less than 0.5 µm, the accumulated information electric charge may be adversely affected by the trouble such as the approach of the opposite electric charge to the surface of the electrostatic image recording medium. If film thickness is 50 µm or more, trouble may be caused in reproducing the information.

Electrostatic information recording and reproducing or playing-back processes using an electrostatic information recording medium according to the present invention will now be explained.

Basically, the electrophotographic information recording system used to this end comprises an electrostatic information recording medium and a photosensitive member located in opposition thereto.

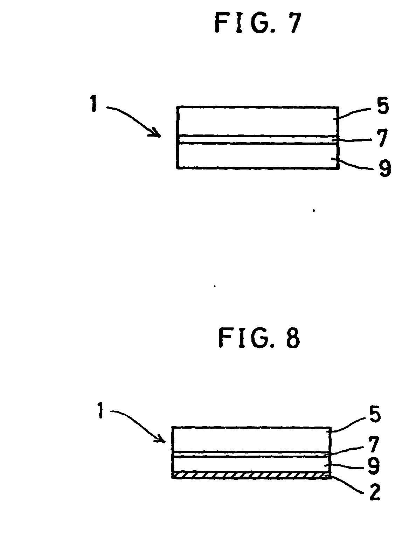

Upon being irradiated with light, a photoconductive layer 9 forming a photosensitive member 1, as shown in Figure 7, generates light carriers (electrons, positive holes) from the irradiated region, which can migrate widthwise therethrough. The layer 9 is more effective esp. in the presence of an electric field. The layer 9 may be formed of an inorganic photoconductive material, an organic photoconductive material, a composite type of inorganic/organic photoconductive material thereof and so on.

Such photoconductive materials and the formation of the photoconductive layers will now be explained.

### (A) Inorganic Photosensitive Member (Photoconductor)

Inorganic photosensitive materials used may include amorphous silicon, amorphous selenium, cadmium sulfide, zinc oxide and so on.

### (a) Amorphous Silicon Photosensitive Member

The amorphous silicon photosensitive member may be formed of:
(i) Hydrogenated amorphous silicon (a-Si:H), and
(ii) Fluorinated amorphous silicon (a-Si:F) which is not doped with impurites, is doped with B, Al, Ga, In, Tl or the like into a p-type (a hole transfer type), or is doped with P, Ag, Sb, Bi or the like into an n-type (an electron transfer type).

For the formation of a photosensitive layer, silane and impurity gases may be introduced with a hydrogen gas, etc. into a low vacuum atmosphere (10⁻² to 1 Torr) to deposit them on an electrode substrate heated or not heated by glow discharge into a film, or may be formed on a simply heated electrode substrate through thermochemical reactions. Alternatively, the starting solid material may be formed into a film by vapor deposition or sputtering. The obtained film maybe used in the form of a single or laminated layers. The film may have a thickness of 1 to 50 µm.

A transparent electrode 7 may be provided on its surface with a charge blocking layer which, when not exposed to light, serves to prevent charges from being injected from the transparent electrode 7, as if exposed to light. For that purpose, an insulating layer or layers such as a-SiN, a-SiC, SiO₂ and Al₂O₃ layers may be formed on one or both of the electrode substrate and the uppermost (surface) layer of the photosensitive member by glow discharge, vapor deposition, sputtering or other suitable means. The insulating layer(s) is (are) required to have a thickness of at least 3000 Å or below, since too an increased thickness prevents charges formed by exposure from passing through the insulating layer, with the result that they are accumulated in the photosensitive member in the form of space charges. It is preferred that the insulating layer(s) has (have) a thickness of 100 to 1000 Å by reason that it (they) is (are) then easy to prepare.

Preferably, the electrode substrate may be formed as the charge blocking layer with a charge transport layer capable of transporting charges of polarity opposite to that of the electrode substrate, making use of a rectifying effect. If the electrode is negative, a hole transport layer may then be provided, and if the electrode is positive, an electron transport layer may then be provided. For instance, a-Si:H (n⁺) wherein Si is doped with boron has hole transport properties so increased that it produces a rectifying effect, and so functions as a negative charge blocking layer.

### (b) Amorphous Selenium Photosensitive Member

Photosensitive amorphous selenium includes (i) amorphous selenium (a-Se), (ii) amorphous selenium tellurium (a-Se-Te), (iii) amorphous arsenic selenium (a-As₂Se), (iv) amorphous arsenic selenium Te (a-As-Se-Te) or the like.

This photosensitive film may be prepared by vapor deposition or sputtering, and an SiO₂, Al₂O₃, SiC or SiN layer may be formed on an electrode substrate as the charge blocking layer by vapor deposition, sputtering, glow discharge or other suitable means. Alternatively, the above substances (i) to (iv) may be used in combination and formed into a laminated type of photosensitive member. The photosensitive member may have a similar film thickness as stated in connection with the amorphous silicon photosensitive member

### (c) Cadmium Sulfide (CdS)

This photosensitive member may be prepared by coating, vapor deposition or sputtering. For vapor deposition, solid particles of CdS may be placed on a tungsten boat and vapor-deposited thereon by resistance heating or EB (electron beams). For sputtering, a CdS target may be used to deposit on a substrate in argon plasma. In this case, CdS is usually deposited in an amorphous state, but it may be possible to obtain a crystalline oriented film (oriented in the thickness direction) by selecting the conditions for sputtering. For coating, CdS particles (having a particle size of 1 to 100 µm) dispersed in a binder with the addition of a solvent may be coated on a substrate.

### (d) Zinc Oxide (ZnO)

This photosensitive member may be prepared by coating or CVD. For coating, ZnO particles (having a particle size of 1 to 100 µm) dispersed in a binder with the addition of a solvent may be coated on a substrate. For CVD, an organic metal such as diethyl zinc or dimethyl zinc is mixed with an oxygen gas in low vacuum (10⁻² to 1 Torr) and subjected to chemical reactions on an electrode substrate heated (to 150 to 400 °C), whereby it is deposited thereon in the form of a zinc oxide film, which is again oriented in the thickness direction.

### (B) Organic Photosensitive Member

The organic photosensitive member is broken down into single-layer and function-separated types.

### (a) Single Layer Type of Photosenstive Member

The single layer type of photosensitive member comprises a mixture of a charge generator substance with a charge transporter substance.

### Charge Generators

The charge generators are substances having the property of absorbing light to generate charges and transmitting such charges to the charge transporter substances. Used to this end are substances based on azo pigments, bis-azo pigments, trisazo pigments, phthalocyanine pigments, perylene pigments, triphenylmethane dyes, styryl dyes, azulenium salt pigments, squalenium salt pigments, methine pigments, pyrylium dyes, cyanine dyes and methine dyes.

### Charge Transporters

The charge transporters are substances capable of satisfactorily transporting ionized charges. Used to this end are substances based on hydrazones, pyrazolines, polyvinyl carbazoles, carbazoles, stilbenes, anthracenes, naphthalenes, tridiphenylmethanes, azines, amines, aromatic amines, oxadiazoles, triazoles, polycyclic aromatics and the like.

A charge-transfer complex may also be formed from the charge-generating and transporting substances.

Usually, photosensitive members have their photosensitive characteristics determined by the light absorption properties of the charge-generating substances. However, the complexes obtained by mixing the charge generating substances with the charge transporting substances have their light absorption properties varied. For instance, polyvinyl carbazole (PVK) is only sensitive in an ultraviolet region and trinitrofluorenone (TNF) is only sensitive in the vicinity of a 400-nm wavelength region, but a PVK-TNF complex is sensitive even to wavelength regions of up to 650 nm.

Preferably, such a single layer type of photosensitive member has a film thickness of 10 to 50 µm.

### (b) Function-Separated Type of Photosensitive Member

The charge-generating substances tend to absorb light to generate charges but have the property of trapping charges, whereas the charge-transporting substances have superior charge-transporting characteristics but are inferior in the charge-generating properties due to light absorption. For that reason, both the substances are separated from each other to make much use of their individual properties. A charge generating layer is thus laminated on a charge transporting layer, and vice versa.

In order to make the function-separated type of photosensitive member, the charge-generating substance is first dissolved or dispersed with a binder in a solvent and the resulting coating solution is spread on an electrode to form a charge generating layer. Then, the charge transporting substance is likewise dissolved or dispersed with a binder in a solvent and the resulting coating solution is spread and then dried on the charge generating layer to form a charge transporting layer. Preferably, the charge generating layer may have a film thickness of 0.1 to 10 µm, while the charge transporting layer may be of 10 to 50 µm in film thickness.

Binders used for both the single-layer and function-separated types of organic photosensitive members may include, for instance, silicone resins, styrene/butadiene copolymer resins, epoxy resins, acrylic resins, saturated or unsaturated polyester resins, polycarbonate resins, polyvinyl acetal resins, phenolic resins, polymethyl methacrylate (PMMA) resins, melamine resins and polyimide resins. For facilitated deposition, the binder may be used in an amount of 0.1 to 10 parts per part of each of the charge-generating and transporting layers. For coating, use may be made of dipping, vapor deposition, sputtering or other suitable means.

### (c) Inorganic/Organic Laminated Type of Photosensitive Layer

The member may be formed (1) using the above inorganic photoconductive layer such as a-Si, a-Se, CdS and ZnO layers for the charge generating layer and the above organic charge transporting layer for the charge transporting layer or (2) using the above organic charge generating layer for the charge generating layer and the above inorganic photoconductive layer for the charge transporting layer.

Referring to the film thickness, the charge-generating and transporting layers may be 0.1 to 10 µm and 10 to 50 µm, respectively, as is the case with the above function-separated type of organic photosensitive member.

The charge blocking layer will now be explained in more detail.

The charge blocking layer may be provided to prevent a dark current from occurring on at least one or both sides of the photoconductive layer 9 (the injection of charges from the electrode) at the time when voltage is applied, viz., a phenomenon where, as if exposed to light, charges migrate through the photoconductor even when not actually exposed to light.

The charge blocking layer is of two types, one making use of a so-called phenomenon where charge transfer occurs in the presence of a high electric field and the other the rectifying effect. With the layer making use of such a phenomenon a current does neither pass through the photoconductive layer nor reach the surface of the insulating layer. When light is incident upon that layer, however, a high electric field is applied to its region on which light is incident due to the presence of one (electron or hole) of charges generated in the photoconductive layer, so that a current can pass through the charge blocking layer through the resulting charge transfer effect. Such a charge blocking layer may be formed of an inorganic insulating film, an organic insulating polymeric film, an insulating mono layer and so on, which may be used alone or laminated. The inorganic insulating film may be obtained from As₂O₃, B₂O₃, Bi₂O₃, CdS, CaO, CeO₂, Cr₂O₃, CoO, GeO₂, HfO₂, Fe₂O₃, La₂O₃, MgO, MnO₂, Nd₂O₃, Nb₂O₅, PbO, Sb₂O₃, SiO₂, SeO₂, Ta₂O₅, TiO₂, WO₃, V₂O₅, Y₂O₅, Y₂O₃, ZrO₂, BaTiO₃, Al₂O₃, Bi₂TiO₅, CaO-SrO, CaO-Y₂O₃, Cr-SiO, LiTaO₃, PbTiO₃, PbZrO₃, ZrO₂-Co, ZrO₂-SiO₂, AIN, BN, NbN, Si₃N₄, TaN, TiN, VN, ZrN, SiC, TiC, WC, Al₄C₃ and so on by glow discharge, vapor deposition, sputtering or other suitable means. It is noted that the thickness of this film may be determined for each material, while taking into consideration the insulating properties for preventing the injection of charges and the charge transfer effect. For the charge injection-preventing layer making use of the rectifying effect, there is provided a charge transporting layer capable of transporting charges and having polarity opposite to that of the electrode substrate. Thus, such a charge injection-preventing layer is formed of an inorganic photoconductive layer, an organic photoconductive layer or a composite inorganic/organic type of photoconductive layer, and has a film thickness of about 0.1 to 10 µm. More specifically, when the electrode is negative, use may be made of an amorphous silicon photoconductive layer doped with B, Al, Ga, In and so on as well as an organic photoconductive layer obtained by dispersing throughout resins amorphous selenium or oxadiazole, pyrazoline, polyvinyl carbazole, stilbene, anthracene, naphthalene, tridiphenylmethane, triphenylethane, azine, amine, aromatic amine or the like. When the electrode is positive, use may be made of an amorphous silicon photoconductive layer doped with P, N, As, Sb, Bi or the like as well as a ZnO photoconductive layer or the like formed by glow discharge, vapor deposition, CVD, coating or other suitable means.

The photosensitive member used in the present invention is also characterized in that a discharge-reinforcing layer 2 in the form of a film is formed on the above photoconductive layer 9, as illustrated in Figure 8.

As the discharge-reinforcing materials, use may be made of metal compounds of high electron emisivity such as BaO, CaO, SrO, MgO, CeB₆, CsSb, Sb-Rb-Cs, Ag-O-Cs, W-Th, TiC, TiO, Y₂O₃, La₂O₃, Dy₂O₃ and ThO₂ or metal oxides.

The discharge-reinforcing layer 2 may be formed on the surface of the photoconductive layer 9 by conventional film-forming techniques such as vapor deposition, sputtering, plasma CVD or coating using a binder, and have a film thickness of preferably 50 to 5000 Å, more preferably 100 to 1000 Å.

The electrode 7 is provided on a support 5, except that the support is formed of a metal, and may be formed of any material having a specific resistance value of 10⁸Ω·cm or below. Usable to this end are, e.g., an inorganic metal film, an inorganic metal oxide film or an organic film such as a quarternary ammonium salt film, all being electrically conductive. Such an electrode 7 may be formed on the support 5 by vapor deposition, sputtering, CVD, coating, plating, dipping, electrolytic polymerization or other suitable means. The thickness of the electrode 7 has to be varied depending upon the electrical properties of the material forming it and the voltage to be applied for recording information, but may be on the order of 100 to 3000 Å where it is formed of aluminium, for instance. As is the case with the photoconductive layer support 5, the electrode 7 is required to have such optical properties as mentioned above, when it is necessary for information-bearing light to be incident thereon. For instance, if the information-bearing light is visible light (400 to 700 nm), use may then be made of transparent electrodes obtained by the vapor deposition or sputtering of, e.g., ITO (In₂O₃-SnO₂) or SnO₂ or the coating of finely divided powders thereof formed with a binder into an ink, semi-transparent electrodes obtained by the vapor deposition or sputtering of, e.g., Au, Al, Ag, Ni or Cr, or organic transparent electrodes obtained by the coating of, e.g., tetracyanoquinodimethane(TCNQ) or polyacetylene.

The above electrode material may also be used in the case where the information-bearing light is infrared light (700 nm or more). In some cases, a colored electrode capable of absrobing visible light may be used so as to cut off visible light.

Bascially, the above electrode material may be also used in the case where the information-bearing light is ultraviolet light (400 nm or below). However, an electrode substrate material absorbing ultraviolet light (such as an organic polymeric material and soda glass) is unpreferred. Thus, preferable is a material such as quartz glass, which can transmit ultraviolet light therethrough.

No particular limitation is imposed on the material and thickness of the support 5 of the photosensitive member, as long as it has strength sufficient to support the photosensitive member. For instance, use may be made of flexible plastic films, metal foils, paper, glass, plastic sheets or rigid materials such as metal sheets (which may also serve as electrodes). However, when the support is used for a system for recording information with light incident from the photosensitive member, it is essentially required to transmit that light. For the support employed with a camera using natural light incident from the photosensitive member, use may be made of a transparent sheet or plastic film or sheet, all having a thickness of about 1 mm.

Where the support is required to be transparent to light incident from the photosensitive member for information recording, a anti-reflection layer may be provided thereon and/or the thickness of the electrode layer or the photoconductive layer may be adjusted, thereby achieving the desired anti-reflection effect.

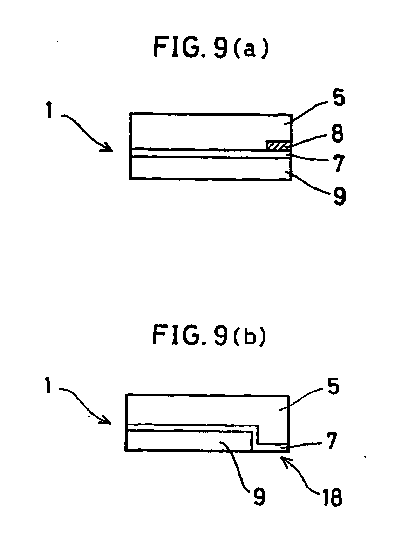

As illustrated in Figure 9(a), a light-shielding portion 8 may be provided in a part of the photosensitive member and in its light path. If the light-shielding portion 8 is formed of a material (such as aluminium) which may be used as an electrode, it then may be disposed either in or on any position of the electrode 7 or in or on any position of the support 5. If the light-shielding portion 8 is formed of a material which may not be used as an electrode, on the other hand, it may then be disposed in or on any position of the support 5. By the provision of such a light-shielding portion, it is possible to obtain the reference for darkness. Any material may be used for the light-shielding portion, provided that it has light-shielding properties.

As illustrated in Figure 9(b), on the other hand, the photoconductive layer 9 may be partly cut out at 18 to expose the electrode to view. This may be used for various corrections when the information to be electrostatically recorded is read as the reference of brightness, since the exposed electrode assumes the maximum value of brightness during exposure. In this case, there should be a difference of 0 to up to 1 µm between the (exposed) surface of the photoconductive layer 9 and the exposed region of the electrode.

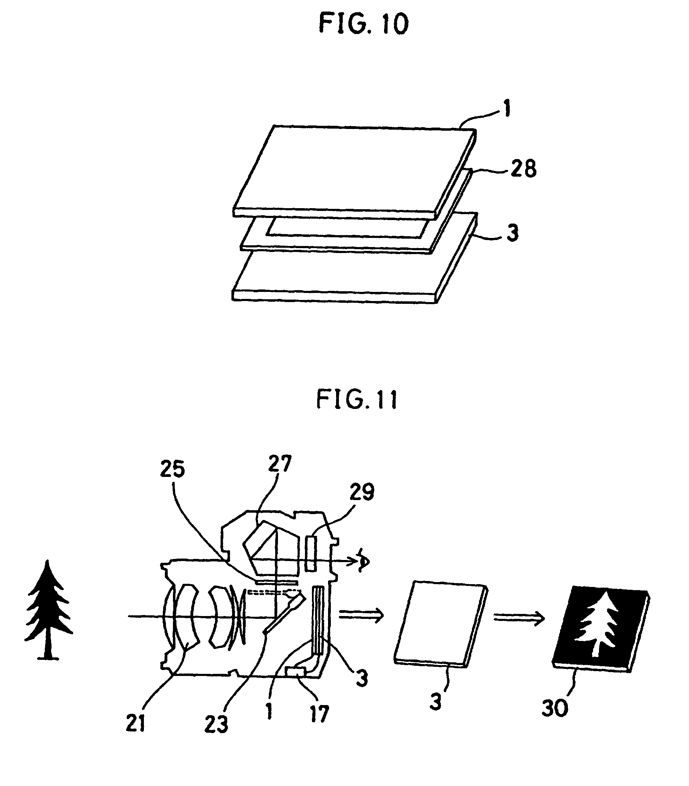

In the electrostatic information recording system according to the present invention, a photosensitive member 1 is laminated on a electrostatic information recording medium 3 in opposite relation through or not through a spacer 28, as illustrated in Figure 10. With a voltage impression type of switch (not shown), charges are accumulated on the insulating layer depending upon the quantity of incident light to form an incident optical image on the charge-retaining layer.

Where the spacer is used, the space between the photosensitive member and the electrostatic information recording medium is sui tably in a range of 1 to 50 µm. The spacer may be formed of an organic material such as plastics or an inorganic material such as glass and laminated in place with an insulating solvent such as silicone oil.

Referring to possible exposure manners, planar exposure may basically be applied. However, scanning exposure recording may also be possible with, e.g., laser. For laser recording systems, argon laser (514, 488 nm), helium-neon laser (633 nm) or semiconductor laser (780 nm, 810 nm, etc.) may be used as the light sources. Voltage is then applied with the photosensitive member being brought in close planar contact with or in opposition to the electrostatic information recording medium at a constant interval. In this case, the electrode may be of the same polarity as that of the carrier of the photosensitive member. In that state, laser exposure corresponding to picture image, character, cord or line signals is carried out by scanning. Analog recording for information, e.g. picture images, is effected by modulation of the light intensity of laser, while digital recording for characters, cords or line pictures is effected by the on-off control of laser beams. Dotted imaging may also be carried out under the dot generator on-off control of laser beams. It is noted that the spectral properties of the photoconductive layer in the photosensitive member need not be panchromatic, and may be sensitive to the wavelength of the laser beam source.

A schematic view of an electrostatic camera to which the electrostatic information recording system of the present invention is applied is illustrated in Figure 11, in which reference numerals common to Fig. 10 stand for like parts. It is noted that reference numeral 21 denotes a photographing lens, 23 a mirror, 25 a forcusing screen, 27 a pentagonal prism, 29 an eye lens and 30 a negative image.

In this electrostatic camera, the photosensitive member 1 and electrostatic information recording medium 3, shown in Fig. 1, are used in place of films for single-lens reflex cameras. Upon a power source 17 put on or off with a switch not shown, the mirror 23 is jumped up to a position shown by a dotted line to form an electrostatic latent image of a subject on the electrostatic information recording medium 3. If required, the toner development of the electrostatic information recording medium gives the negative image 30. The electrostatic potential may also be read to produce electrical signals for display on CRTa or recording on other recording medium such as magnetic tapes.

A color filter used for color imaging will now be explained.

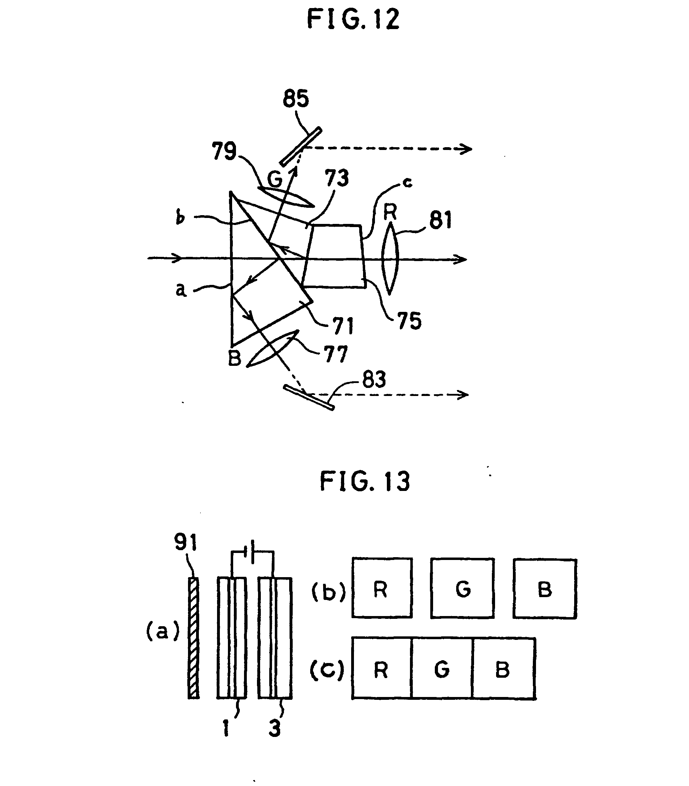

A prismatically optical system for color separation is illustrated in Figure 12, wherein reference numerals 71, 73 and 75 stand for prisms, 77, 79 and 81 filters and 83 and 85 reflectors.

The prismatically optical system for color separation comprises three prismatic blocks. Optical information incident from a plane a of the prismatic block 71 is partly separated and reflected from a plane b and then reflected from the plane a to obtain an optical component of B color through the filter 77. The rest of the optical information is incident on the prismatic block 73 and reaches a plane c from which it is partly separated and reflected. Another portion reaches directly the filters 79 and 81 from which optical components of G and R colors are obtained. The optical components of G and B colors may then be reflected from the reflectors 83 and 85 to obtain the R, G and B light components in the form of parallel light beams.

By disposing such a filter 91 in front of the photosensitive member 1 for photographing as illustrated in Figure 13, one frame may be formed either by three sets of electrostatic information recording media separated into the R, G and B colors, as shown in Figure 13 (b), or by a set of R, G and B images formed on one plane, as illustrated in Figure 13(c).

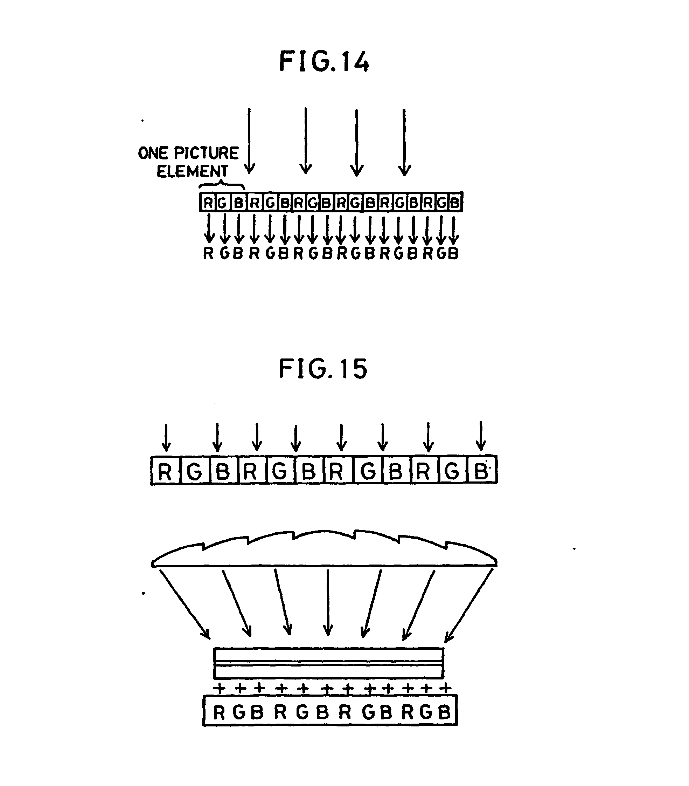

Figure 14 is a fine color filter. For instance, this may be formed, e.g., by exposing a resist-coated film to light through a mask pattern to form striped patterns of R, G and B, which are then dyed in R, G and B; passing the light components separated with the system of Fig. 12 through fine slits to obtain interference fringes of R, G and B, which are then recorded in a hologram recording medium; or exposing a photoconductor to light while a mask is brought in close contact therewith to form striped patterns of R, G and B defined by electrostatic latent images, which are then toner-developed and transferred three times for color compounding, thereby forming toner stripes. In the filter formed as mentioned just above, a set of R, G and B forms one picture element as fine as about 10 µm. If this filter is used as the filter 91 of Fig. 13, it is then possible to form an electrostatic latent image broken down into colors. In this case, the filter may be spaced away from or made integrate with the photosensitive member.

Figure 15 is a view showing an example of a combination of the fine color filter with a Fresnel lens, in which patterns R, G and B can be reduced in size by the Fresnel lens for recording and a lens design may be made more compact and thinner than conventional lens designs.

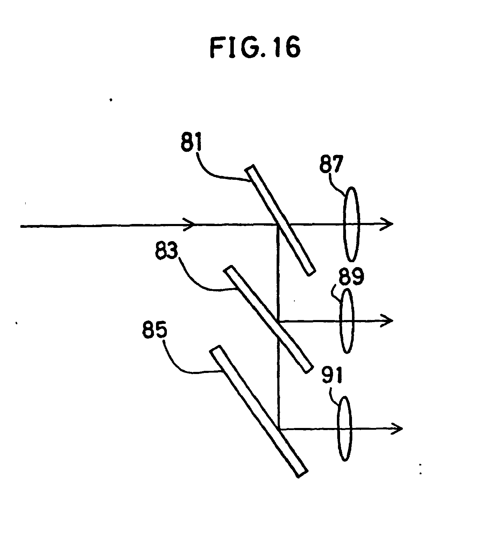

Figure 16 is a view showing an example of three-plane splitting in which an ND (natural density) filter is used in combination with R, G and B filers. Incident light is split into three portions through ND filters 81 and 83 and a reflector 85, which are then allowed to pass through an R filter 87, a G filter 89 and a B filter 91 to obtain R, G and G components of light as parallel light beams.

As the color filter, use may also be made of a holographic color filter on which interference fringes are formed and recorded by irradiating a photosensitive material with two monochromatic light beams from the same or opposite side. For instance, use may be made of a holographic color filter on which interference fringes of three primary colors are formed by irradiating a photosensitive material masked on its one side with monochromatic light beams of three primary colors at successively varied mask positions.

In this case, at least one of the light beams of three primary colors for irradiation from the same or opposite side may be caused to be incident on the photosensitve material at an angle.

Without recourse to a mask, the photosensitive material may be irradiated with the light beams of three primary colors at varied angles with two of the three light beams being used in a combination of divergent light with convergent light.

The thus formed holographic color filter is easy to make because of only a single development step being needed, thus resulting in cost reductions and diffracted light of pure color being obtained.

Reference will now be made to how to make this holographic color filter and its application to the electrostatic information recording and reproducing processes.

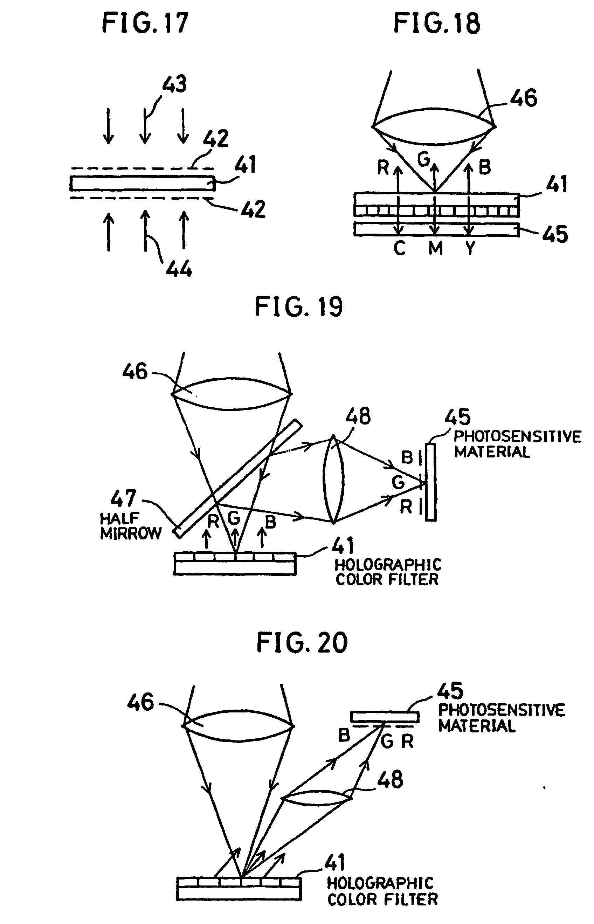

Figures 17 and 18 are views showing one embodiment of the holographic color filter, in which reference numeral 41 stands for a photosensitive material, 42 a mask, 43 and 44 monochromatic light beams, 45 a photosensitive material and 46 a lens.

As illustrated in Figure 17, the mask 42 slitted, e.g., in the striped form is positioned in place on both sides of the photosensitive material 41, which is then irradiated with monochromatic light, e.g., R light from the opposite directions to record an interference pattern due to the R light. Then, interference patterns are recorded in superposed relation by G light with the mask 42 displaced by a given distance and then B light with the mask 42 similarly displaced by a given distance. Subsequent development of the interference patterns thus subjected to triple exposure gives a color hologram.

Then, while the formed color hologram 41 is brought in close contact with the photosensitive material 45, it is irradiated with light through the lens 46 from the opposite direction, as illustrated in Figure 18. Thereupon, the reflected light beams of R, G and B are obtained as regenerated light beams, while the transmitted light beams of C, M and Y are obtained as the complementary colors of R, G and B. Obtained in this case is a striped color filter in which one picture element is defined by R, G and B.

In the instant embodiment, only one development is need for each R, G and B. And, since R, G and B are in principle subjected to total reflection with no possibility of color mixing, it is possible to obtain the transmitted light beams of pure C, M and Y and use the holographic color filter at 100 % efficiency.

Figure 19 is a view showing another embodiment. Throughout Figs. 17-19, the same parts are indicated by the same reference numerals. It is noted, however, that 47 and 48 stand for a half mirror and a lens, respectively.

In the instant embodiment, a holographic color filter is prepared in a similar manner as illustrated in Figure 17 to make use of R, G and B light components appearing on the incident side.

The R, G and B light components, which appear on the incident side, cannot be used as such. For that reason, they are guided sideways by the half mirror 4 and condensed for use. More exactly, upon light striking upon the hologram 41 through the lens 46, R, G and B light components are reflected from the hologram 41 and then the half mirror 47 to form R, G and B images on the photosensitive material 45 under the condensing action of the lens. It is here to be noted that the lens 48 is used for condensing purposes, since the photosensitive material 45 cannot be brought in close contact with the film, unlike the system of Fig. 18.

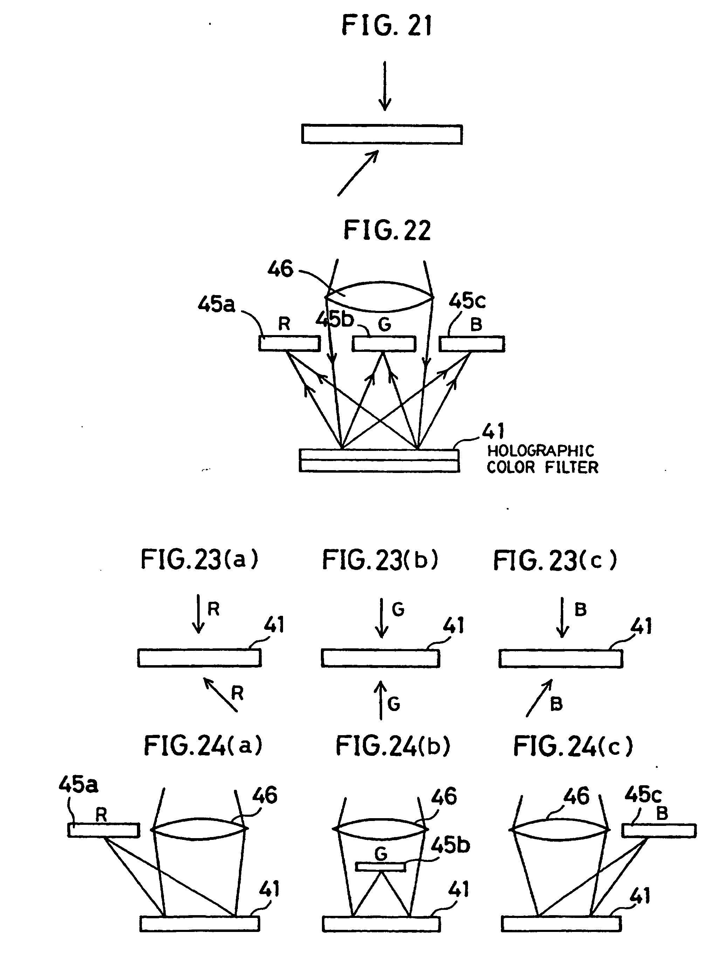

Figures 20 and 21 are views showing still another embodiment. Throughout Figures 19 to 21, like reference numerals stand for like parts.

In the embodiment of Fig. 19, the use of the half mirror 47 leads to light losses, so that the resulting images tend to become dim. In the instant embodiment, therefore, one monochromatic light is caused to be obliquely incident so as to form a hologram. Upon light striking upon a holographic color filter comprising this hologram, R, G and B light components are reflected therefrom at angles. Hence, the R, G and B light components are deflected sideways for focusing on the photosensitive material 45.

Figures 22 and 23 are views illustrating a further embodiment, wherein each of R, G and B is exposed to light to form a holographic color filter.

As illustrated in Figures 23(a), (b) and (c), a holographic color filter is subjected to triple exposure with R light, G light and B light. As illustrated, this holographic color filter is then irradiated with the light through a lens 46, whereby R, G and B images can be formed on an off-line. In other words, the R, G and B images are reflected in different directions, as shown in Figure 14, whereby they can be formed on the respective photosensitive materials 45a, 45b and 45c.

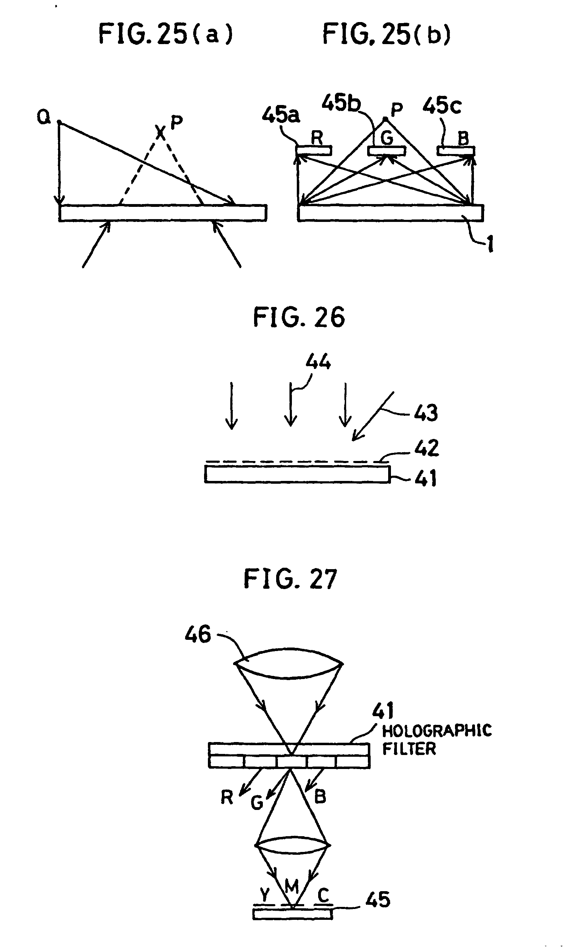

It is understood that in the exposure system of Fig. 23, monochromatic light diverging from a point P may be focused on a point Q by the interference of monochromatic light condensing at the point P with the monochromatic light diverging from the point Q, as illustrated in Figure 25(a). It is thus possible to form the R, G and B images on the photosensitive materials 45a, 45b and 45c in a lensless manner by varying the point Q for each R, G and B light to form interference fringes as illustrated in Figure 25(a), whereby the filter is irradiated with the light diverging from the point P, as shown in Figure 25(b).

With a system of such a structure as illustrated in Figure 25, a lenslike action can be imparted to a holographic color filter. When this holographic color filter is applied to the electrostatic information recording and reproducing processes of the present invention, it is possible to increase the dosage per unit area and condense light with high resolution, thus making high-quality recording possible.

The foregoing refers to a reflection type of holographic color filter. In what follows, reference will now be made to a transmission type of holographic color filter.

As illustrated in Figure 26, monochromatic light beams 43 and 44 are caused to be incident on a photosensitive material 41 with the given angles being made therebetween. With a mask 42 displaced for each R, G and B, interference fringes are recorded in the photosensitive material 41 to form a holographic color filter.

Figure 27 is a view showing an example of the thus prepared transmission type of holographic color filter making use of zero-order light.

In the instant embodiment, primary diffracted light beams of R, G and B are generated in the same direction as the incident light 43, so that zero-order light beams of C, M and Y are obtained as transmitted light beams, which may then be focused on a photosensitive material 45 to form a color image.

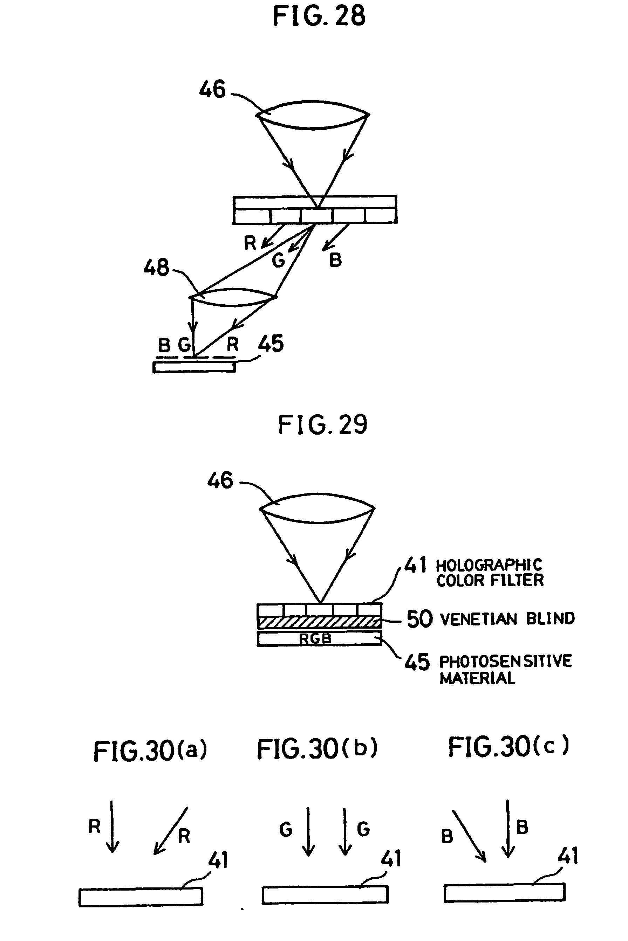

Figure 28 is a view showing a further embodiment of the present invention, wherein the primary diffracted light beams of R, G and B of Fig. 27 are designed to be focused on a photosensitive material 45 through a lens 48.

Figure 29 is a view showing a further embodiment of the present invention using a Venetian blind, wherein a holographic color filter 41, a Venetian blind 50 and a photosensitive material 45 are brought in close contact with one another to make use of diffracted light in a predetermined direction. The Venetian blind 50 is only transparent to light in its crystal direction and serves to select only zero-order transmitted light or primary diffracted light to form an image defined by such light on the photosensitive material 45.

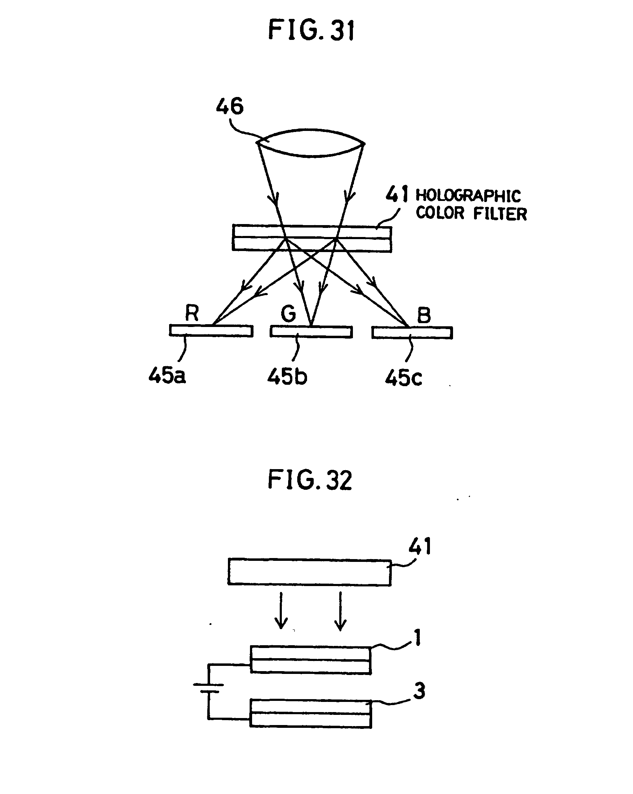

Figure 30 is a view showing a further embodiment wherein a photosensitive material 41 is subjected to triple exposure with monochromatic light beams of R, G and B from the same direction, as shown in Figures 30(a), 30(b) and 30(c). In this case, the angles of both beams of each monochromatic light are varied, as illustrated in Figure 31, whereby the transmitted primary diffracted light components of R, G and B are separated during the irradiation of light.

Figure 32 is a view illustrating the application of a holographic color filter to the electrostatic information recording and reproducing processes of the present invention. If the photosensitive member 1 is exposed to light through this holographic color filter, it is then possible to increase the dosage per unit area and hence obtain sufficient brightness, and conduct color exposure of high resolution with the application of voltage.

Reference will now be made to the electrostatic information recording process according to the present invention.

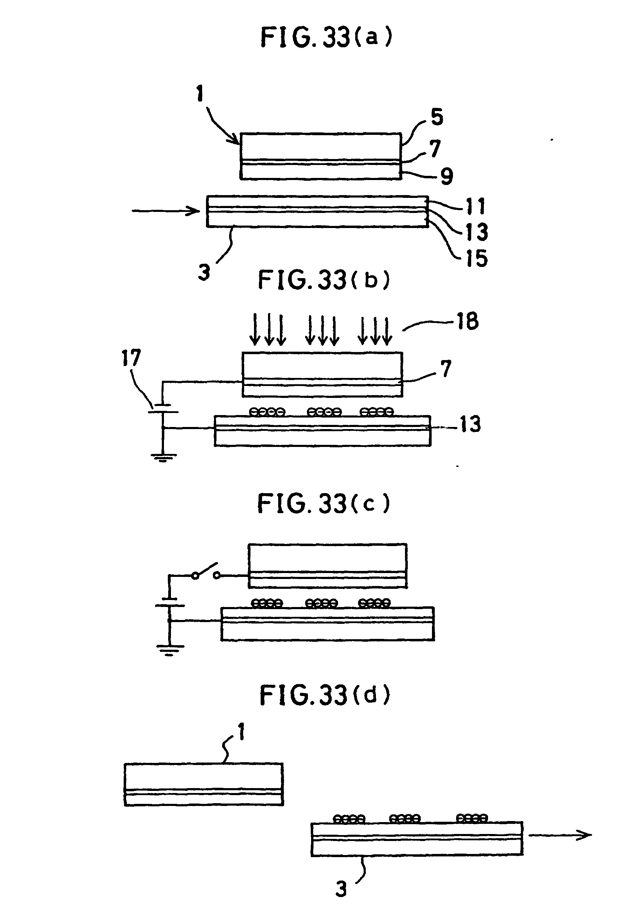

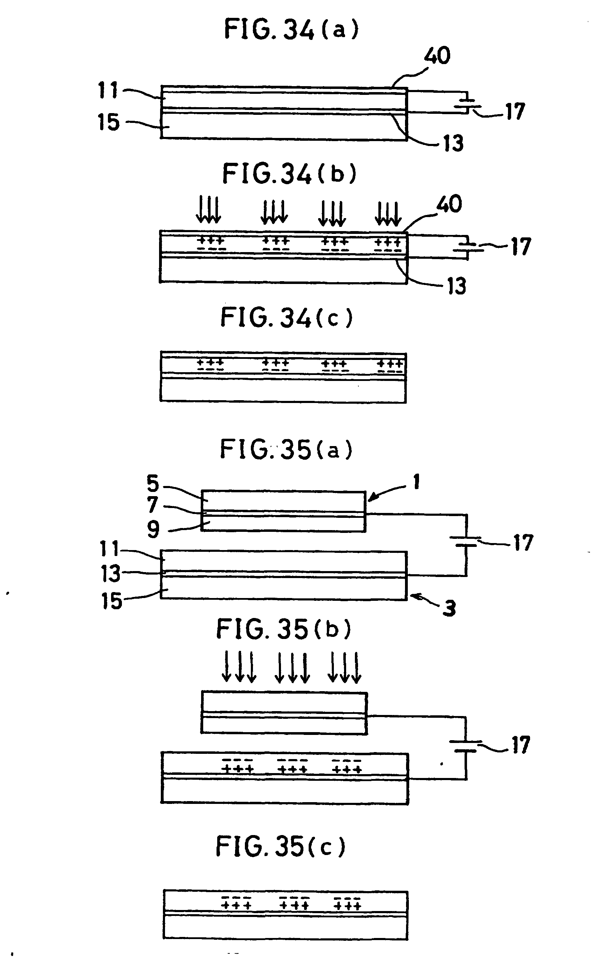

This process is illustrated in Figure 33 in which reference numeral 1 denotes a photosensitive member, 3 an electrostatic information recording medium, 5 a support, 7 an electrode, 9 a photoconductive layer, 11 a charge retaining layer (an insulating layer), 13 an electrode, 15 a support and 17 a power source.

In the embodiment of Fig. 33, exposure is carried out from the photosensitive member 1. The photoconductive layer support 5 formed of 1-mm thick glass is first provided thereon with the transparent electrode 7 formed of 1000-Å thick ITO, on which the photoconductive layer 9 of about 10 µm in thickness is formed to obtain the photosensitive member 1. With respect to this photosensitive member 1, the electrostatic information recording medium 3 is arranged through a gap of about 10 µm. The electrostatic information recording medium 3 is obtained by the vapor deposition of an aluminium electrode of 1000 Å in thickness on the insulating layer support 15 formed of 1-mm thick glass, followed by the formation of a 10-µm thick charge retaining layer (an insulating layer) on that electrode.

As illustrated in Figure 33(a), the recording medium 3 is first arranged with respect to the photosensitive member 1 through a gap of about 10 µm. Then, voltage is applied from the power source 17 between the electrodes 7 and 13, as illustrated in Figure 33(c). Since the photoconductive layer 9 is a high resistor in a dark place, no change takes place between the electrodes, if the voltage applied to the gap is lower than the firing voltage according to the Paschen's law. As a voltage higher than the firing voltage is applied to the gap from an external power source, discharge occurs to build up charges on the surface of the electrostatic information recording medium and that state continues until the firing voltage is reached, thus resulting in a background potential. When light 18 is incident from the photosensitive member 1, a portion of the photoconductive layer 9, on which the light strikes, is made so electrically conductive that discharge takes place through the air layer to accumulate charges on the electrostatic information recording medium. If microparticles of photoconductivity and electrical conductivity are incorporated in the charge retaining layer, information-bearing charges migrate into such microparticles by an electric field defined by the built-up charges and, optionally, by exposure, and are then stabilized in the insulating layer. Even when there are previously uniform background charges further accumulation of charges takes place on the portion of the photoconductive layer 9 on which the light strikes. After the completion of the exposure, the voltage is shut off as illustrated in Figure 33(c), and the electrostatic information recording medium 3 is then removed out, whereby the formation of an electrostatic latent image is completed.

The photosensitive member 1 may be brought in contact (as mentioned above) or no contact with the electrostatic information recording medium 3. In the contact type system, positive or negative charges are injected from the electrode 7 of the photosensitive member into the portion of the photoconductive layer 9 exposed to light. While attracted by the electrode 13, the injected charges pass through the photoconductive layer 9 and reach the surface of the insulating layer 11 where they stop and are accumulated. Then, with the photosensitive member 1 separated from the electrostatic information recording medium 3, the insulating layer 11 is separated while the charges remain accumulated thereon.

The voltage applied and exposure time are arbitarily determined where the quantity of incident light is in proportion to the amount of charge transfer and before the amount of charge transfer is saturated. In the present invention, however, it is preferred that a voltage of 100 V to 2000 V is applied as a voltage shutter for 10⁻⁶ to 10 seconds so as to achieve electrostatic recording of high sensitivity. With the first and second electrostatic recording media, electrostatic information may be recorded in this manner.

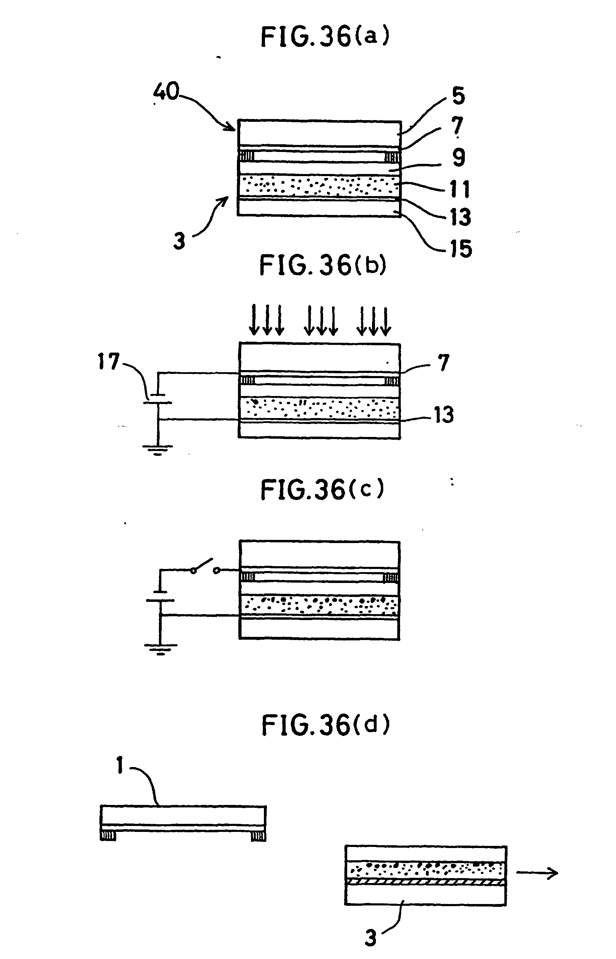

The electrostatic information recording medium is exposed to information-bearing light while located in opposition to a transparent electrode 40, as illustrated in Figure 36. When a photoconductive layer 9 is to be laminated on the recording medium, however, information is first recorded in the electrostatic information recording medium.

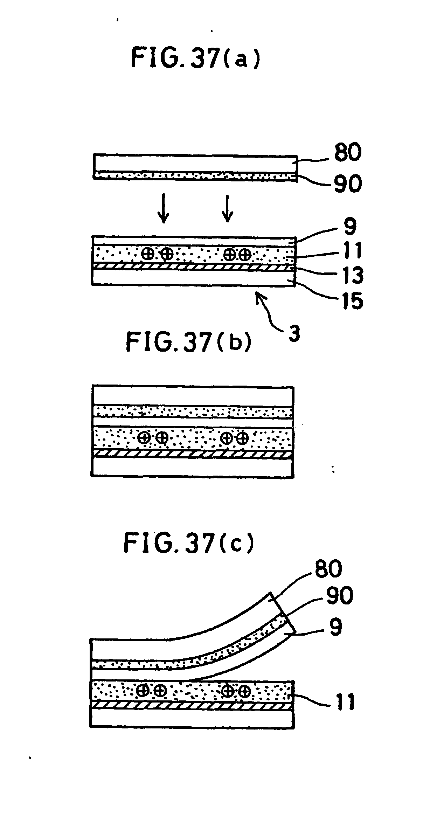

Then, a plastic film 80 coated with, e.g., an adhesive agent 90 is applied on the photoconductive layer 9, as shown in Figure 37. By releasing the plastic film 80, the photoconductive layer 9 is bonded to the plastic film adhesive layer to release a charge retaining layer as shown in Figure 37(c), thereby stabilizing information-bearing charges.

This is because the information-bearing charges tend to diffuse through the photoconductive layer with the lapse of time.

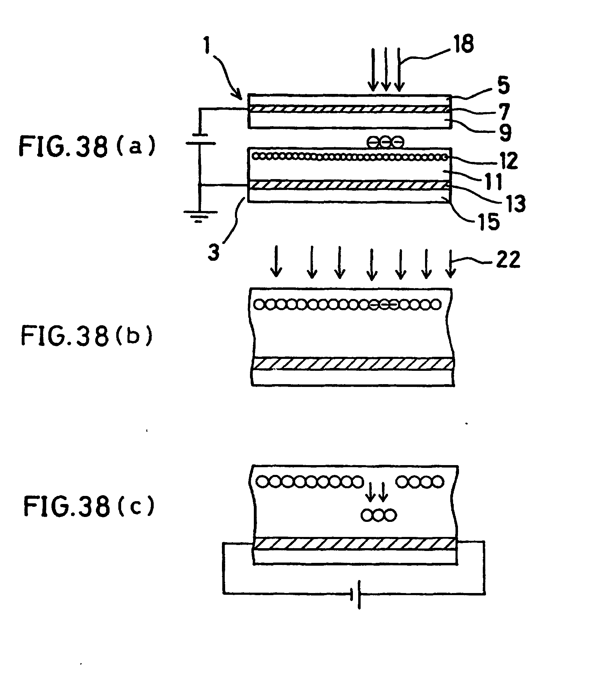

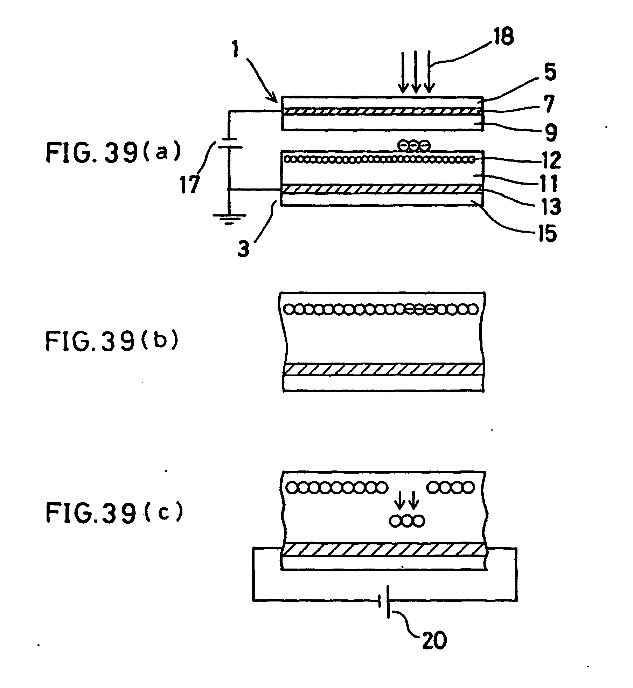

Reference will now be made to a specific embodiment of the electrostatic information recording process wherein electrostatic information is recorded as the positional information of microparticles and played back as the electrostatic information. Figure 38 is a view for illustrating an electrostatic information recording step in which the microparticles used are photoconductive, and Figure 39 shows an electrostatic information recording step in which electrically conductive microparticles are used according to the present invention.

Referring to an electrostatic information recording medium 3, an aluminium electrode of 1000 Å in thickness is vapor-deposited on a support 15 of 1-mm thick glass, and is then provided thereon with a resinous layer 19 containing a 10-µm thick charge transporting material, below which a photoconductive particulate layer 12 having a particle size of about 1 µm is spaced about 1 µm apart.

As illustrated in Figure 38(a), the electrostatic information recording medium 3 is arranged with respect to a photosensitive member 1 through a gap of about 10 µm, and voltage is applied between electrodes 7 and 13 to obtain polarity reverse to the transport polarity of the charge transport material contained in the resinous layer 19. Upon light 18 being incident from the photosensitive member 1, a portion of a photoconductive layer 9, upon which the light strikes, is made so electrically conductive that discharge takes place between it and the resinous layer 19, resulting in the accumulation of charges on the surface of the resinous layer 19. Even when there are previously uniform background charges, further storage of charges occurs on the portion on which the light strikes. Subsequently, a power source 17 is put off, and the electrostatic information recording medium 3 is released from the photosensitive member 1 and exposed on its overall surface to light, as shown at 22. Thereupon, electron and positive hole carriers are generated in particles 12 in the portion exposed to light, and are in turn caused to migrate by a high electric field defined by surface charges, so that the opposite charges are neutralized and stably stored in the particles 12 as the information-bearing charges. Referring then to Figure 38(c), when the electrostatic information recording medium is subjected to resistance heating or the resinous layer 19 is heated and softened by other suitable means, the particles having the information-bearing charges migrate toward the electrode substrate, in which they remain confined by the curing of resin, so that the information-bearing charges in the particles are converted to positional information.

The use of an electrically conductive material will now be explained with reference to Figure 39.

Since the electrically conductive microparticles carry sufficient electrons and positive holes, unlike the photoconductive microparticles, no uniform exposure is needed. Stored on the electrically conductive particles are charges corresponding to surface charges. After the completion of the exposure, the particles are allowed to migrate by heating the resinous layer in a similar manner as mentioned above.

It is noted that the photosensitive member 1 may come in contact with the electrostatic information recording medium in contrast to the above non-contact arrangement. In this manner, the charges of the particulate layer 12 are fixed in the resinous layer in the form of positional information and stored over an extended period of time.

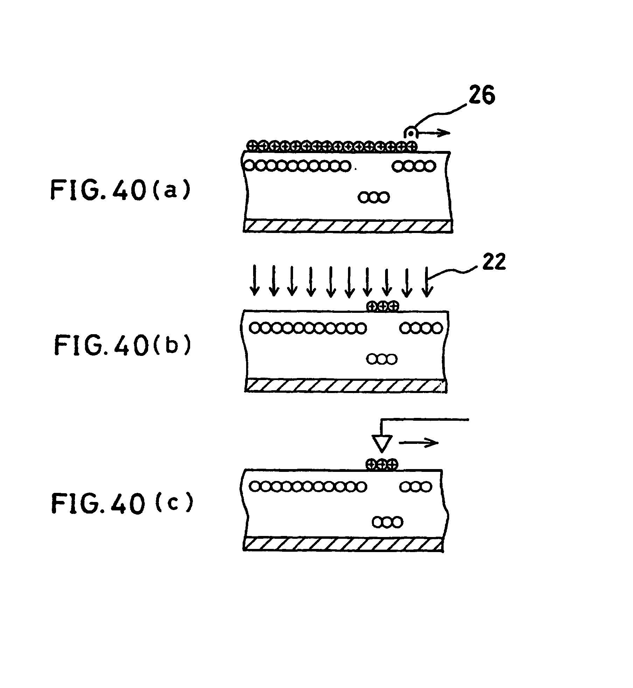

The positional information in the particulate layer is reproduced as electrostatic information. In order to reproduce the information stored as the position of the particles in the resinous layer in the case where the microparticles used are photoconductive, voltage polarity is first determined such that charges of the same polarity as that of the charge transport material in the electrostatic information recording medium are formed by corona electrical charging at 26, thereby electrifying the overall surface of the resinous layer in the recording medium, as illustrated in Figure 40(a). Then, the resinous layer is exposed on its overall surface to light shown at 22, as illustrated in Figure 40(b), whereby surface charges are accumulated on a region in which the information is stored, while carrier pairs of positive holes and electrons are generated in a region in which no information is stored, one charges serving to negative surface charges and the other charges migrating through the resinous layer and re-joining to the opposite charges of the electrode substrate, resulting in immediate erasion of the surface charges. Then, the surface charges of the region in which the information is stored are detected, as illustrated in Figure 40(c). Other means to form surface charges on the electrostatic information recording medium involves applying voltage to that recording medium through, e.g., opposite electrodes instead of applying corona electrical charging.

With the electrically conductive microparticles, overall exposure may be dispensed with. The surface charges of the region in which no information is stored are erased by electrical conductivity, but the surface charges of the region in which the information is stored in the form of positional information may be easily reproduced as information-bearing charges.

How to read the information-bearing charges recorded in the electrostatic information recording medium will now be explained.

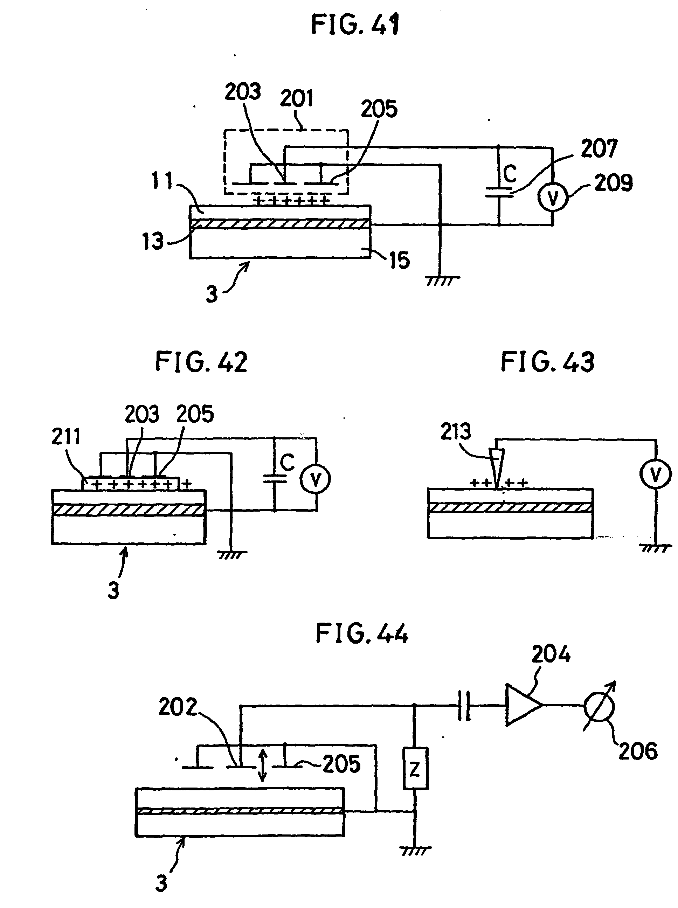

As an example, how to read potentials in the electrostatic information recording and playing-back processes according to the present invention is illustrated in Figure 41 wherein the same parts as in Fig. 1 are indicated by the same reference numerals. It is noted that reference numeral 201 stands for a potential reader section, 203 a detection electrode, 205 a guard electrode, 207 a capacitor and 209 a voltmeter.

When the potential reader section 201 is located in opposition to the surface of an electrostatic information recording medium 3 on which charges are built up, the detection electrode 203 is subjected to an electric field defined by charges accumulated on a charge retaining layer 11 of the recording medium 3, thus generating on its surface induction charges in the amount equal to that of the charges on the recording medium 3. Since the capacitor 207 is charged with charges of polarity opposite to that of such induction charges in the same amount, there is a potential difference corresponding to the accumulated charges between the capacitor's electrodes, which is in turn read on the voltmeter 209, thereby determining the potential of the charge retainer. Then, an electrostatic latent image can be produced in the form of electrical signals by scanning the surface of the electrostatic information recording medim with the potential reader section 201. It is noted that only with the detection electrode 203, there is a drop of resolving-power under the action of an electric field (an electric line of force) defined over a range wider than the region of the recording medium opposite to the detection electrode; hence, the guard electrode may be grounded around the detection electrode. According to such a system, since the electric line of force acts vertically to a plane, it can be obtained from only the region opposite to the detection electrode 203. Thus, it is possible to read the potential of a region having an area nearly equal to that of the detection electrode. Since the accuracy and resolving-power of potential reading vary largely depending upon the geometry and size of the detection and guard electrodes as well as the space between them and the electrostatic information recording medium, it is essentially required to design them while taking into account the optimum conditions to meet the performance demanded.

Figure 42 illustrates another system to read potentials, which is similar to that illustrated in Figure 41, provided that the potential is detected through an insulating protective film 211 on which the detection and guard electrodes are mounted.

According to this system designed to come in contact with the electrostatic information recording medium for the detection of potentials, it is possible to keep constant the space between the detection electrode and the recording medium.

Figure 43 is a view showing still another system of how to read potentials, wherein a needle-like electrode 213 is brought in direct contact with the electrostatic information recording medium to detect the potential of the region of contact. In this system, it is possible to obtain high resolving-power due to reductions in the area to be detected. Higher reading rates are also achievable by the provision of a plurality of needle-like electrodes.

The above systems are all of the DC amplification type designed to detect DC signals in contact or non-contact relation. In what follows, the AC amplification type of systems will now be explained.

Figure 44 is a view for illustrating a vibration electrode type of potential reading system, wherein 202 is a detection electrode, 204 an amplifier and 206 a meter.

The detection electrode 202 vibrates and is driven such that as time goes by, it displaces with respect to a charged surface of an electrostatic information recording medium 3. As a consequence, a potential across the detection electrode 202 varies with time at an amplitude corresponding to the electrostatic potential of the charged surface. This potential change-with-time is then obtained in the form of a voltage change appearing across an impedance Z, and the AC component is in turn amplified by the amplifier 204 through a capacitor C to measure the electrostatic potential of the charged surface in terms of readings on the meter 206.

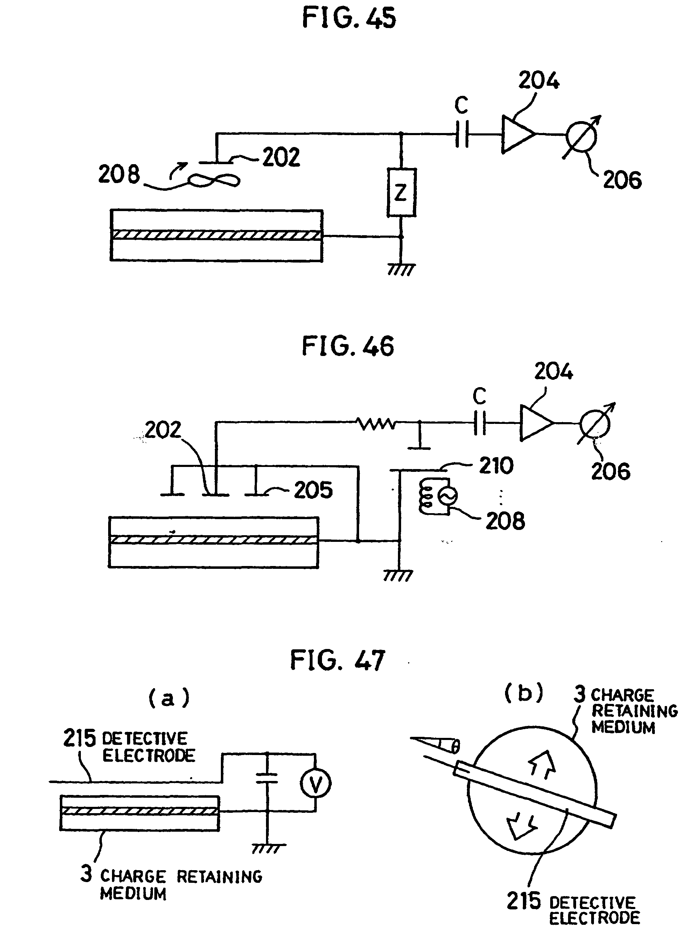

Figure 45 shows an example of a rotary detector, wherein a rotary blade is indicated at 208.

Between an electrode 202 and a charged surface of an electrostatic information recording medium 3, there is the electrically conductive rotary blade 208 driven for rotation by driving means (not illustrated). As a result, the detection electrode 202 is periodically and electrically shielded relative to the electrostatic information recording medium 3. Potential signals varying periodically at an amplitude corresponding to the electrostatic potential of a charged surface is then detected by the detection electrode 202, and the AC component is in turn amplified by an amplifier 204 for reading.

Figure 46 illustrates an example of a vibrating-reed detector, wherein reference numerals 208 and 210 stand for a driving circuit and a vibrating reed, respectively.

The vibrating reed 210 of one electrode forming a capacitor is vibrated by the driving circuit 208 to change the capacitor's capacity. As a result, DC potential signals detected by the detector electrode 202 are modulated, and the AC component is then amplified and detected. With this detector designed to convert a direct current to an alternate current, it is possible to measure potentials with high sensitivity and satisfactory stability.

Figure 47 is a view showing a further example of potential reading, in which potentials are detected by computed tomography (CT) with an elongate detector electrode.

Where a detector electrode 215 is located across and in opposition to a charge-accumulated surface, the data obtained are in the form of curvilinear integration values along the detector electrode. In other words, data corresponding to the CT data are obtained. Thus, the detector electrode is scanned on its overall surface as shown by an arrow in Figure 47(b) and at varied angles (θ) to gather the required data. The obtained data are then processed with CT algorithm, thereby determining a potential distribution on a charge retainer.

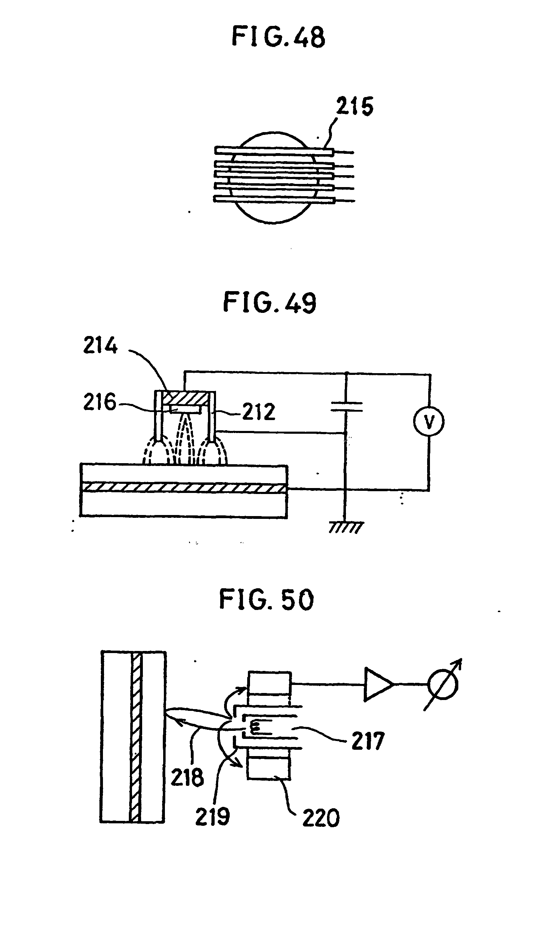

It is noted that if a plurality of detector electrodes 215 are arranged as shown in Figure 48, then the data-gathering rates and hence the overall processing rates are improved.

Figure 49 shows an example of a collector type detector, in which reference numeral 212 denotes a grounded type metallic cylinder, 214 an insulator and 216 a collector.

The collector 216 contains a radioactive substance which emits α rays. In the metallic cylinder, the air is thus ionized to form positive and negative ion pairs. Under natural conditions, these ions tend to disappear by recombination and diffusion and are at equilibrium. In the presence of an electric field, however, they collide repeatedly with air molecules through thermal motion and migrate statistically toward the electric field, thus carrying charges.

More specifically, for the reason that the air is made electrically conductive by ions, an equivalent electrical resistance passage is taken as being defined between the collector 216 and a surrounding object.

Consequently, holds for stationary state the following equation:${\text{V}}_{\text{2}} {\text{= R}}_{\text{2}} {\text{V}}_{\text{1}} {\text{/(R}}_{\text{1}} {\text{+ R}}_{\text{2}} \text{)}$ wherein
- R₀: is the resistance between the charged surface of the electrostatic information recording medium 3 and the grounded metallic cylinder 212,
- R₁: is the resistance between the charged body and the collector 216,
- R₂: is the resistance between the collector 216 and the grounded metallic cylinder 212,
- V₁: is the potential of the charged body, and
- V₂: is the potential of the collector 216.
Thus, it is possible to find the potential of the electrostatic information recording medium by reading the potential of the collector 216.

Figure 50 is a view showing an example of an electron beam type of potential reader system, in which reference numeral 217 denotes an electron gun, 218 electron beams, 219 a first diode and 220 a secondary electron amplifier section.

Electrons leaving the electron gun 217 are deflected by an electrostatic or electromagnetic deflector and scan a charged surface. A portion of the scanning electron beams joins to the charges of the charged surface into a charging current, and so the potential of the charged surface drops to the equilibrium potential, correspondingly. Another portion of the beams is modulated and returned to the electron gun 217, and then collides with the first diode 219. The resultant secondary electrons are amplified by the secondary electron amplifier 220 and obtained from the anode in the form of a signal output. As the return electron beams, reflected or secondary electrons may be used.

With the electron beam type of potential reader system, uniform charges are formed on the medium after scanning, but a current corresponding to a latent image is detected during scanning. When the latent image carries negative charges, the accumulation of charges by electrons is reduced in a region (unexposed) carrying much charges, so that the resultant charging current is limited. However, a maximum charging current occurs, for instance, in a region where any charge is not present. On the contrary, positive charges define a negative type.

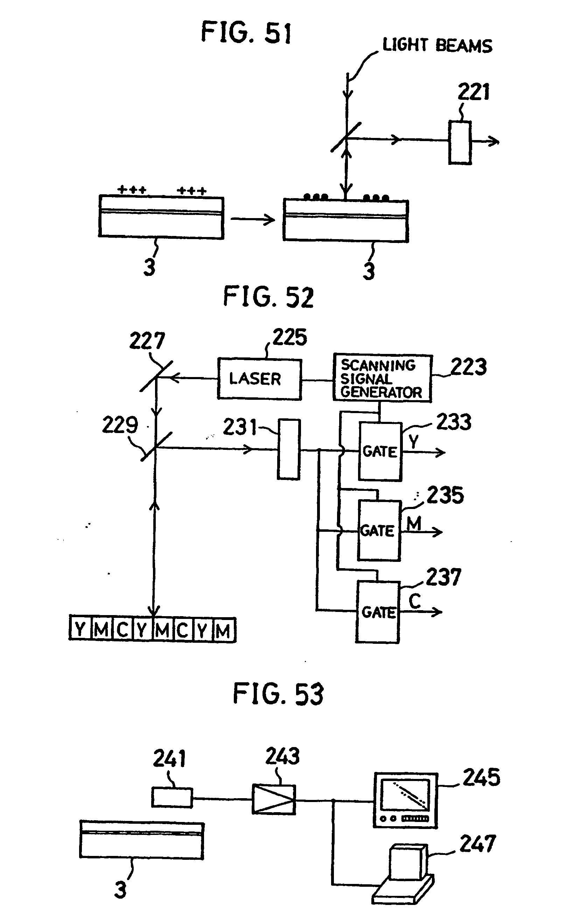

Figure 51 illustrates another example of the potential reader system. An electrostatic information recording medium 3, on which an electrostatic latent image is formed, is toner-developed. The colored surface is then irradiated with light beams for scanning. The reflected light is converted to electrical signals by a photoelectric converter 221. With such a system, high resolving-power is attainable by reducing the diameter of light beams and the detection of electrostatic potentials can be easily carried out in optical fashion.

Figure 52 shows a further example of the potential reader system. Prismatic images R, G and B formed by such fine color filters as will be described later are toner-developed. Then, the colored surface is irradiated with light beams to convert the reflected light to signals Y, H and C. In Figure 52, reference numeral 223 denotes a scanning signal generator, 225 a laser, 227 a reflector, 229 a half mirror, 232 a photoelectric converter and 233, 235 and 235 gate circuits.

With scanning signals from the generator 223, a colored surface is irradiated with laser beams from the laser 225 through the reflector 227 and half mirror 229 for scanning. The light reflected from the colored surface is then fed into the photoelectric converter 231 to convert it to electrical signals. If the gate circuits 233, 235 and 237 are controlled for opening or closing synchronously with the signals from the generator 223, then they are controlled for opening or closing synchronously with the pattern of the fine filters. Thus, it is possible to obtain signals Y, M and C, even when they are not previously colored.

It is noted that even when a color image is split into three planes as will be described later, signals Y, M and C are quite similarly obtainable, again, without previously coloring them.

In the systems illustrated in Figures 51 and 52, it is required for the toner-developed image to have the τ characteristic corresponding to the quantity of electrical charging of the latent image. For that reason, it is required to provide no threshold value with respect to an analog change in the quantity of electrical charging. Given the corresponding relationship, it is then possible to correct γ by electrical processings, even when the γ characteristic is in no coincidence with the quantity of electrical charging.

Figure 53 is a schematical view showing the process for reproducing electrostatic images according to the present invention, in which reference numeral 241 stands for a potential reader, 243 an amplifier, 245 a CRT and 247 a printer.

Referring to this figure, a charge potential is detected by the potential reader 241, and the resultant output is amplified by the amplifier 243 for display on the CRT 245 or printing-out with the printer 247. In this case, the region to be read may be arbitarily selected and output at any time, or may be repeatedly reproduced. With the electrostatic latent image obtained in the form of electrical signals, it may then be recorded in other recording media, if required.

For the reproduction of surface charges with the printer 247, use may be made of printing means such as thermal dye transfer, ink jet, hot-melt transfer, microcapsules, silver salts, toners or the like and display means such as flat CRTs, plasma CRTs, liquid crystal displays, projection, LEDs, ELs, TV telephones, word processors, CGs, presentation or the like.

Reference will now be made to a protective film laminated on the charge retaining layer in which information is recorded in this manner for the purpose of improving the charge retainability of that layer.

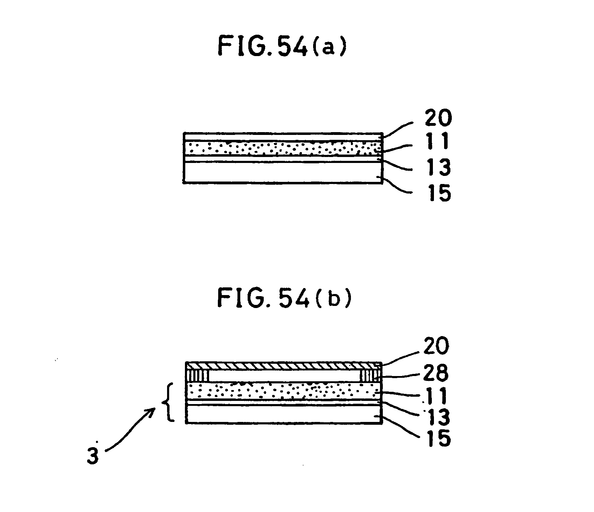

In the electrostatic information recording media according to the present invention, it is preferred that as illustrated in Figure 54(a), a protective layer 20 is laminated on the surface of the charge retaining layer to prevent its failure or the attenuation of information-bearing charges.

In order to form the protective film, use is made of one or a mixture of materials showing such adhesion that it is releasable for reading during the reproduction of information such as reclaimed rubber, styrene-butadiene rubber, polyisoprene, butyl rubber, Buna-N (butadiene-acrylonitrile rubber), polyvinyl ethers (including ethyl or higher hydrocarbon groups), polyacrylate esters (having ethyl or higher hydrocarbon groups), silicone rubber, polyterpene resins, gum rosins, rosin esters, rosin derivatives, oil-soluble phenolic resins, cumarone-indene resins and petrolic hydrocarbon resins. Such a material or mixture is then formed into a film of hundreds Å to tens µm in thickness, which is in turn laminated on the surface of the electrostatic information recording medium. Alternatively, an insulating plastic film may be laminated on that surface with a releasable close contact adhesive agent. As such adhesive agents, use may be made of materials having a specific resistance of 10¹⁴Ω·cm or higher such as silicone oil, dimethyl silicone oil, methylphenyl silicone oil, higher fatty acid-modified silicone oil, methyl chlorinated phenyl silicone oil, alkyl-modified silicone oil, methyl hydrogen silicone oil, cyclic dimethyl polysiloxanes, silicone polyether copolymers, amino-modified silicone oil, epoxy-modified silicone oil and insulating oil, which may be used alone or in combination of two or more.

It may also be possible to laminate an insulating plastic film on the charge retaining layer with the use of a bonding agent.

Furthermore, with the application of suitable means such as vapor deposition or spinner coating, a solution of an insulating plastic film in a solvent may be applied on the charge retaining layer into a film of hundreds Å to tens µm in thickness as measured upon drying.

The hot-melt transfer materials used may include EVA (ethylenevinyl acetate copolymers), EEA (ethylene-ethylene acrylate copolymers), polyamide resins, rosinous resins, hydrogenataed petrolic resins, pinene-base resins, hydrocarbonic resins, synthetic rosinous resins, terpenic resins and wax which, if required, may be used in the form of a mixture of two or more or with the addition of inorganic powders. Preference is given to a material allowing the protective layer to be subjected to hot-melt transfer at a temperature sufficient to prevent the attenuation-by-heating of charges on the charge retaining layer.

Information reading may be feasible from above the protective layer, and it is preferred to decrease the thickness of the protective film so as to improve the resolution of reading. This is because a sensor for reading should preferably have access to a region in which more charges are stored for the purpose of improving the resolution of reading. Where the resolution of reading is negligible, it is possible to increase the thickness of the protective film.

If the protective film used is of such an adhesive type as mentioned above, then it may be released from the charge retaining layer to reproduce the information on its surface.

As illustrated in Figure 54(b), a protecting film 20 may be laminated on a charge retaining layer 11 in a non-contact state. In this case, it is preferable that a plastic film is used as the protective film and laminated on that layer 11 through a spacer 28. A suitable space between the charge retaining layer and the protective layer is in a range of 1 to 50 µm, and a suitable spacer is formed of an organic material such as plastics. In order to reproduce the recorded information, the protecting film 20 may be released from the charge retaining layer 11 to read the information-bearing charges thereon. It is required that the spacer 28 be releasably bonded to the charge retaining layer 11 with the above close contact adhesive agents such as silicone oil.

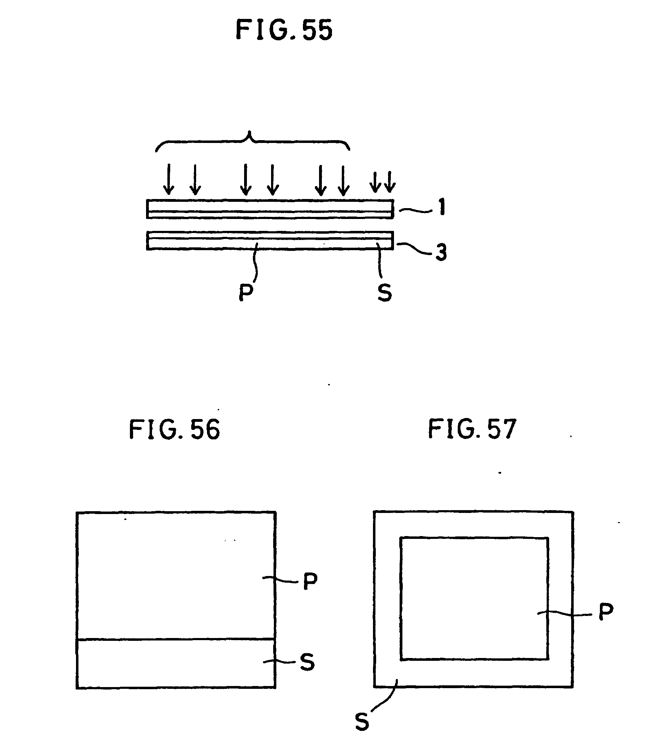

Figure 55 is a view showing an electrostatic information recording medium in which audio and image information items are recorded according to the present invention.

Predetermined voltage is impressed between a photosensitive member 1 and an electrostatic information recording medium 3, and an electrostatic latent image is recorded in that medium by subsequent exposure. In the present invention, image information carried by natural light, image information carried by light of an illumination light source reflected from a manuscript and the like are applied to the photosensitive member 1 to record their latent images on the electrostatic information recording medium 3. At the same time, a laser light source or the like is modulated by audio signals and audio information is applied to the photosensitive member 1 in the form of optical information to record it in the electrostatic information recording medium 3. Thus, the image information along with the audio information is recorded in the electrostatic information recording medium 3.

Figures 56 and 57 are views showing zones for storing image and audio information items. Since the volume of audio information is much smaller than that of image information, an image information storing zone P is located at a central portion of the recording medium, while an audio information storing zone S is positioned at an end or edge portion thereof.

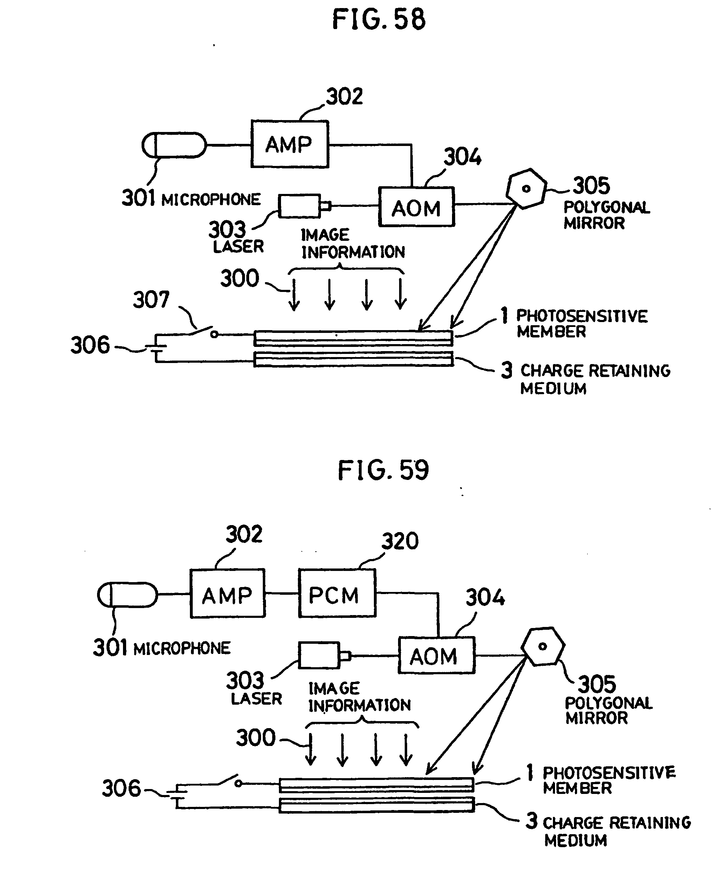

A process for recording image information along with audio information in the electrostatic information recording medium according to the present invention is illustrated in Figure 58, wherein reference numeral 301 stands for a microphone, 302 an amplifier, 303 a laser, 304 an acoustic to optical converter, 305 a polygonal mirror and 306 a power source.

The power source 306 is designed to apply predetermined voltage between the photosensitive member 1 and the electrostatic information recording medium 3 by putting a switch 307 on or off. While the predetermined voltage is applied, the photosensitive member is then exposed to light 300 carrying image information to form on the recording medium 3 a latent image potential corresponding to the image. Electrical signals fed in through the microphone 301 and corresponding to a sound are amplified by the amplifier 302, and laser beams from the laser 303 are modulated in response to audio signals by the acoustic to optical converter 304. The modulated signals are then applied to the photosensitive member 1 by the scanning of the polygonal mirror 305 to form on the recording medium 3 a latent image potential corresponding to the audio signals. Thus, the audio information is recorded along with the image information in the electrostatic information recording medium 3. As a result, when an image such as a landscape is recorded on the electrostatic information recording medium 3, photographing conditions, etc. may be recorded in the form of sounds. It is thus possible to reproduce that image with appropriate comments.

In the foregoing embodiment, the light is modulated by a combination of the optical modulator with the polygonal mirror for scanning and exposure purposes. It is noted, however, that electron beam scanning may be performed through a combination of CRTs with modulation means as is the case with, e.g., a flying spot scanner (FSS for short) to conduct scanning and exposure through the photosensitive member with light emanating from blips on a cathode-ray tube. Alternatively, the electrostatic information recording medium may be located in proximity and opposition to the tube plane of a sort of CRT including thereon a group of needle electrodes for direct discharge recording in the recording medium through the needle electrodes upon which scanning electron beams strike.

Figure 59 is a view illustrating another recording process making use of PCM modulation, wherein the same parts as illustrated in Fig. 58 are indicated by the same reference numerals. With the process of Figure 59, it is possible to record high-quality audio information resistive to noises, since audio signals are converted to digital signals by PCM 320.

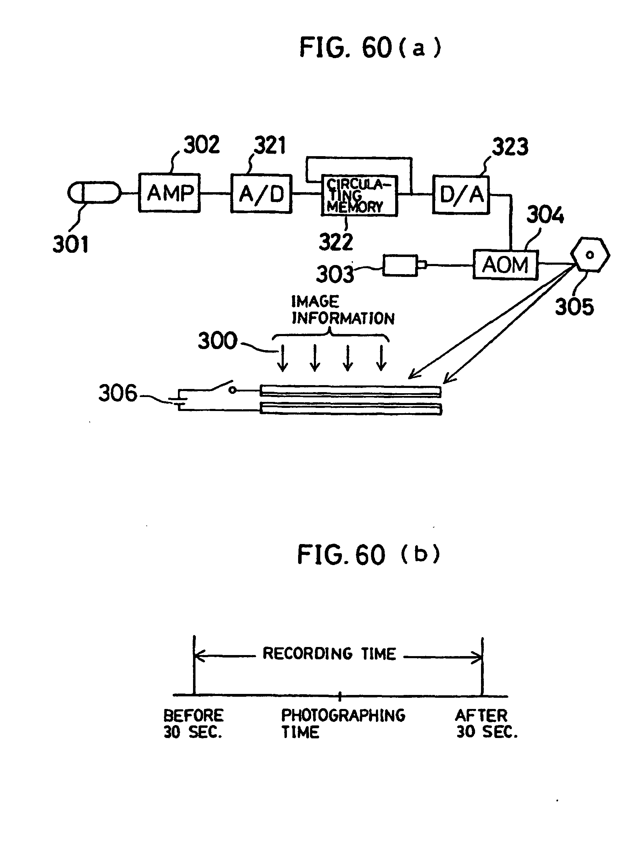

Figure 60 is a view showing a further recording process making use of a circulatory memory, in which reference numeral 321 denotes an A/D converter, 322 a circulatory memory and 323 a D/A converter.

In the instant embodiment, audio signals are subjected to A/D conversion for recording in the circulating memory 322, and the output of that memory 322 is subjected to D/A conversion for recording. The circulating memory 322 has a storage capacity capable of storing audio information over a constant period of time with its stored content being successively renewable, so that the audio information can be always stored from a certain previous time up to the present time. For instance, if the storage capacity of the circulating memory is such that audio information is recordable for one minute, then the audio information can be recorded from before 30 seconds of photographing to after 30 seconds. It is thus possible to achieve a reproduction of the photographed situation with real presence. For instance, if an image of a steam locomotive can be photographed with sounds generated therefrom and a shutter sound, then the reproduced image will remind a viewer of the situation where photographing was conducted.

Reference will now be made to the structure of card members in which the electrostatic information recording medium of the present invention is used.

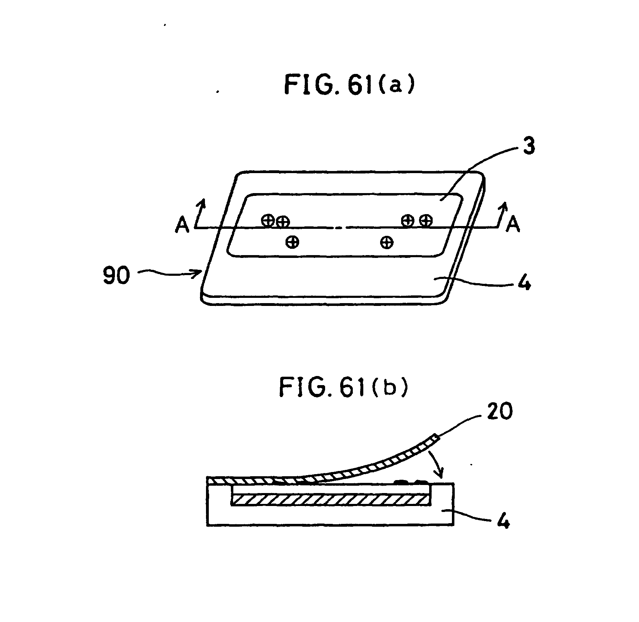

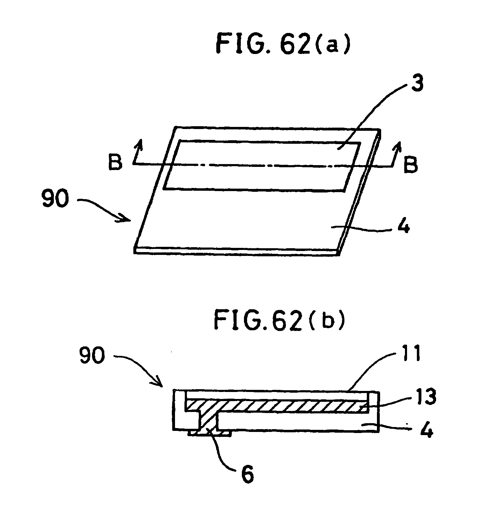

Figure 61(a) is a perspective view of a ROM type of electrostatic information recording card according to the present invention and Figure 61(b) a sectional view taken along the line A-A of Fig. 61(a) for showing a protective film provided in place. Figure 62(a) is a perspective view of a DRAW type of electrostatic information recording medium and Figure 62(b) a sectional view taken along the line B-B of Fig. 62(a).

A card substrate 4 on which an electrostatic information recording medium 3 is to be placed may be formed of any material of any thickness, if its strength is sufficient to support the recording medium 3. For instance, use may be made of flexible plastic sheets such as vinyl chloride sheets or rigid sheets such as glass sheets, ceramic sheets and metal sheets (which may also serve as electrodes). Without recourse to an electrostatic information recording medium support 15, an electrode 13 and a charge retaining layer may be laminated directly on the card substrate 4 in that order. As the support, use may be made of a metal sheet which may also serve as an electrode.

The electrostatic information recording medium 3 may be embedded in or sticked to the card substrate 4 as shown in Fig. 61 or Fig. 62, after or before the recording of information.

Information recording cards 90 are broken down into a ROM type in which information has already been recorded in the electrostatic information recording medium as shown in Figure 61 and a DRAW type in which information is not or partly recorded as shown in Figure 62. For the DRAW type, for instance, an adhesive plastic film, as already mentioned, may releasably be applied to the surface of an insulating layer as the protective film. For recording, the protective film may be peeled off to record information in an unrecorded region. After recording, the protective film may be again applied to the surface of the insulating layer.

The recording mode of the electrostatic information recording media according to the present invention may be used as forgery-safe means for cards, etc. due to its unvisibleness. With the present recording media, planar information processing may be possible because of their increased storage capacity and plane recording being acheivable once by planar exposure. Input or output of electrical signals and planar input of image data are also possible. In addition, various data such as analog, digital, image, sound and (0-1) data are recordable. The present media may further be used as computer's external memories. The information recorded are easily erasable.

The electrostatic information recording media of the present invention are,not only usable as electrostatic recording cards but also applicable to magnetic cards and IC cards as well as ROM, DRAW and EDRAW types of optical cards and marking cards by changing information input means while using the present media as masters. Further, they are usable in varied recording regions.

Therefore, the present media may be used as the recording media for, e.g., ID cards, prepaid cards, credit cards, electronic calculators, electronic pocketbooks, cameras, clinical charts, timetables, maps, charge locks (keys), miniature books, name cards, sensors, dust removers, batteries, bar cords, Karaoke (playback and sound input combinations), communications means such as post cards, records, games, teaching aids and so on. The electrophotographic recording cards according to the present invention may be used as the recording media in banking systems, ID systems, prepaid systems, credit systems, ticket issuing systems, medical diagnosis systems, navigation systems, charge lock systems, communications systems, game systems, teaching systems and other systems.

The present invention will now be explained with reference to the following examples.

### Preparation of Photosensitive Member

### Example A Single-Layer Photosensitive Member

A mixed solution composed of 10g of poly-N-vinylcarbazole (available from Anan Koryo), 10 g of 2,4,7-trinitrofluorenone, 2 g of a polyester resin (a binder available under the trade name of Vylon 200 from Toyobo) and 90 g of tetrahydrofuran(THF) was prepared in a dark place and it was then spread on a glass substrate (of 1 mm in thickness) sputtered with In₂O₃-SnO₂ at a thickness of about 1000 Å with the use of a doctor blade. The product was dried at 60°C for about 1 hour while supplying air thereto to obtain a photosensitive layer having a photoconductive layer of about 10 µm in thickness. For complete drying purposes, air drying was carried for further one day.

### Example 1 - Electrostatic information recording medium

An aluminium electrode was laminated on an 1-mm thick glass substrate to a film thickness of 1000 Å by vacuum vapor deposition (10⁻⁵ Torr). Coated thereon was spread a 50 % solution of a silicone resin (TSR-144, 1 % CR-15, available form Toshiaba Silicone) in xylene by spinner coating (at 1000 rpm for 30 sec.), which was in turn dried at 150°C for 1 hour for the provision of an insulating film having a film thickness of 7 µm. Then, the substrate was heated to 100°C with a heater plate. In that state, selenium was vapor-deposited on the substrate at a low degree of vacuum (3 Torr) for 60 seconds, thereby providing on the silicone layer a crystalline granular layer of selenium having a mean diameter size of 0.5 µm.

After removed out from the vapor depositor, a 5 % solution of polyvinyl carbazole (PVK: Tubicol 210 available from Anan Koryo) in chloroform was spread on the amorphous granular layer of selenium by spinner coating (at 1000 rpm for 30 seconds), and was then dried at 60°C for 1 hour to obtain a charge transport layer having a film thickness of 10 µm. In this manner, an electrostatic information recording medium as shown in Figure 5(a) was formed.

### Example 2

As a resinous layer, an epoxy resin (Aduldite available from Ciba Geigy) that was a thermosetting resin was spinner-coated on a similar substrate as used in Ex. 49. The expoxy resin was then cured at 120°C for 1 hour to form a resinous layer having a film thickness of 15 µm, on which a substrate was deposited in a room temperature state at a similar degree of vaccum as applied in Ex. 1. As a result, amorphous selenium was formed on an insulating layer.

After removed out from the vapor depositor, a 5 % solution of polyvinyl carbazole (PVK: Tubicol 210 available from Anan Koryo) in chloroform was spread on the amorphous granular layer of selenium by spinner coating (at 1000 rpm for 30 seconds), and was then dried at 60°C for 1 hour to obtain a charge transport layer having a film thickness of 10 µm. In this manner, an electrostatic information recording medium according to the present invention was formed.

### Example 3

As a resinous layer, a modified acrylate resin (VDAL-383 available from Dainichi Seika) that was an ultraviolet curable resin was spinner-coated (at 1000 rpm for 20 seconds) on a similar substrate as used in Ex. 1, and was then irradiated with ultraviolet rays emitted from an ultraviolet lamp (a 365-nm peak lamp) at a dosage of 50 mJ/cm² to cure the resinous layer. Then, the vapor deposition of selenium was carried out under similar low vacuum conditions as applied in Ex. 49. As a result, the selenium layer was laminated on the acrylate resin layer having a thickness of 8 µm in the form of a single granular layer having a mean granular size of 0.3 µm.

After removed out from the vapor depositor, a 5 % solution of polyvinyl carbazole (PVK: Tubicol 210 available from Anan Koryo) in chloroform was spread on the amorphous granular layer of selenium by spinner coating (at 1000 rpm for 30 seconds), and was then dried at 60°C for 1 hour to obtain a charge transport layer having a film thickness of 10 µm. In this manner, an electrostatic information recording medium according to the present invention was formed.

### Example 4

In lieu of the polyvinyl carbazole used in Ex. 1, a solution of 5 g of a hydrazone charge transport agent (CTC-191 available from Anan Koryo) and 5 g of polycarbonate (Upiron available from Nippon Gas Chemical) dissolved in 90 g of 1,2-dichloroethane was spread on the crystalline granular layer of selenium by spinner coating (at 1000 rpm for 10 seconds), and was then dried at 60°C for 1 hours to obtain a charge transport layer of 10 µm in thickness.

### Example 5

While the material for vapor deposition was changed from selenium to gold, low-vacuum vapor deposition was carried out by crucible resistance heating under similar conditions as applied in Ex. 1. As a result, black gold microparticles having a mean particle size of 0.2 µm were formed on the silicone resin layer in a single layer state. Then, a 10-µm thick charge transport layer comprising a polyvinyl carbazole similar to that used in Ex. 1 was laminated on the gold layer to obtain an electrically conductive granular type of electrostatic information recording medium of the structure wherein charges were internally accumulated.

### Example 6

Aluminium was vapor-deposited on one side of a fluorine film (an FEP film available from Daikin Kogyo) to a thickness of 1000 Å to form a substrate. Under similar vapor deposition conditions as applied in Ex. 2, selenium particles were vapor-deposited on the surface of the film. As a result, a single layer of a uniform granular layer having a granular size of about 0.4 µm was formed. A 10-µm thick charge transport layer comprising a polyvinyl carbazole similar to that used in Ex. 1 was then coated with a blade coater having a gap width of 200 µm.

### Example 7

In the deposition of selenium in Ex. 1, the deposition time was increased from 60 seconds to 300 seconds. As a result, plural layers of crystalline selenium were formed on the silicone resin layer. This was confirmed under an optical microscope. In a similar manner, the polyvinyl carbazole was later laminated.

### Example 8

A 50 % solution of a silicone resin (TSR-144 available from Toshiba Silicone and containing 1 % of a curing agent CR-15) diluted with xylene was spinner-coated (at 1000 rpm for 20 seconds) on an 1-mm thick glass substrate vapor-deposited with 1000-Å thick aluminium, and was then dried at 150°C for 1 hour to evaporate off the solvent and cure the resin. As a result, a silicone resin layer having a film thickness of 7 µm was formed.

Subsequently, 10 g of a rosin ester resin (Stayberite Ester 10) and 10 g of zinc oxide (having a mean particle size of 10 µm) were mixed with 80 g of n-butyl alcohol, and the mixture was introduced with 100 g of glass beads (3 mmφ) in a stainless-made cylindrical vessel of 300 ml in volume, followed by lidding. The mixture was then dispersed with a vibration type dispersing machine (Red Devil) for 2 hours. After removed out from within the vessel, the zinc oxide dispersed layer was coated on the silicone resin by spinner coating (at 500 rpm for 60 seoncd), and was then dried at 60°C for 3 hours. As a result, the film thickness of the dispersed layer was 3 µm. Then, a 10-µm thick charge transport layer similar to that used in Ex. 1 was laminated to obtain a medium as shown in Figure 5(b).

### Example 9

The zinc oxide/resin dispersed solution prepared in Ex. 8 was coated directly on an aluminium substrate with a whaler (at 200 rpm for 30 seconds), and was thereafter dried at 60°C for 3 hours for the lamination of a zinc oxide-dispersed resin layer having a film thickness of 15 µm. Then, a 10-µm thick charge transport layer similar to that used in Ex. 1 was laminated on this resin layer to form a dispersed type of electrostatic information recording medium as illustrated in Fig. 5(c).

### Example 10

The single layer organic photosensitive member (PVK-TNF) prepared in Ex. A was arranged with the electrostatic information recording medium prepared in Ex. 49 in such a manner that the charge transport layer's surface of the recording medium was grounded in opposition to the photoconductive layer's surface, using as the spacer a 10-µm thick polyester film. Then, a DC voltage of - 700 V was applied between both electrodes with the photosensitive member negatively and the resinous layer positively.

While the voltage was impressed, exposure was carried out from the photosensitive member for 1 second, using as the light source a halogen lamp having a luminous intensity of 1000 luxes. After the completion of the exposure, the electrostatic information recording medium was removed out and exposed on its overall surface to light, whereby the formation of an electrostatic latent image was completed.

As a result, a surface potential of - 100 V was measured on the exposed region of this recording medium by a surface electrometer, while a surface potential of 0 V was obtained on the unexposed region thereof.

When the surface potential of the electrostatic information recording medium was measured in a dark place prior to overall exposure, a surface potential of its exposed region was found to be - 110 V. It was thus appreciated that charges were accumulated in the selenium particles by the overall exposure.

Then, similar exposure was performed while a resolution pattern film was brought in close contact with the glass substrate of the photosensitive member. As illustrated in Figure 53, the electrophotographic information recording medium was thereafter subjected to X-Y axis scanning with a 50 × 50 µm probe surface for measuring microarea potentials to process potential data of 50 µm units, which were then displayed on a CRT by potential-brightness conversion on an enlarged scale. As a result, resolution patterns of up to 100 µm were confirmed on the CRT. After the exposure, the electrostatic information recording medium was allowed to stand at room temperature of 25°C and 35 % R.H. for three months. Subsequent potential reading by scanning indicated that resolution pattern displays quite similar to those just after the exposure were obtained.

For alternative exposure, a subject was photographed with an ordinary camera at an impression voltage of - 700 V, an exposure f=1.4 and a shutter speed of 1/60 sec. outdoors in the daytime. After the exposure, the electrostatic information recording medium was subjected to X-Y axis scanning with a 50 × 50 µm probe surface for measuring microarea potentials to process potential data of 50 µm units, which were in turn displayed on a CRT by pontential-brightness conversion on an enlarged scale. As a result, imaging having gradiation occurred.

Color images were photographed in the following manners.

### (1) Prismatic Three-Plane Splitting

As illustrated in Figure 12, the R, G and B filters were disposed on three planes of a prism, and the same media as mentioned above were set thereon to photograph a subject at f=1.4 and a shutter speed of 1/30 sec.

### (2) Color CRT Displaying

The R, G and B latent images were read by scanning in a similar manner to form fluorescences corresponding thereto on a CRT, and the resulting images separated into three colors were compounded on the CRT to obtain a color image.

### Comparative Example (a)

A solution of 10 g of a rosin ester resin (Stayberite Ester 10) dissolved in 90 g of n-butyl alcohol was spinner-coated (at 1000 rpm for 20 seconds) on an 1-mm thick glass substrate vapor-deposited with 1000-Å thick aluminium, and was thereafter dried at 60°C for 1 hour to evaporate off the solvent, thereby forming a resinous layer having a film thickness of 2 µm.

### Comparative Example (b)

A 50 % solution of a silicone resin (TSR-144 available from Toshiba Silicone and containing 1 % of a curing agent CR-15) diluted with xylene was spinner-coated on an 1-mm thick glass substrate vapor-deposited with 1000-Å thick aluminium, and was thereafter dried at 150°C for 1 hour to evaporate off the solvent and cure the resin, thereby forming a silicone resin layer having a film thickness of 7 µm.

Table 2 shows the charge retainability of the electrostatic information recording media of Examples 1 to 9, as expressed in terms of the surface potentials measured with the lapse of time. The surface potentials of the media of Comparative Examples a and b, as measured with time, are also tabulated in Table 2.

**Table 2**

| Estimation of Stability with Time of Internally Accumulated Charges | | | | | |
|---|---|---|---|---|---|
| Ex. Nos. | Initial Pot. (V)(1*) | Initial Pot. (V). (2*) | 1-Day Stor. (60°C,dry) | 7-Day Stor. (60°C,dry) | 30-Day Stor. (60°C,dry) |
| 1 | - 120 | - 100 | - 95 | - 70 | - 35 |
| a | - 105 | - 105 | - 40 | 0 | 0 |
| 2 | - 150 | - 135 | -120 | - 65 | - 30 |
| 3 | - 130 | - 120 | -100 | - 60 | - 25 |
| 4 | - 165 | - 140 | -135 | -110 | - 90 |
| b | - 155 | - 155 | -130 | - 50 | 0 |
| 5 | - 95 | - 95 | - 90 | - 75 | - 50 |
| 6 | - 160 | - 150 | -150 | -140 | -115 |
| 7 | - 200 | - 180 | -140 | - 80 | - 30 |
| 8 | - 100 | - 90 | - 80 | - 40 | - 10 |
| 9 | - 150 | - 120 | -110 | - 80 | - 45 |

| | | | | | |
|---|---|---|---|---|---|
| (1*): Initial potentials of the exposed regions before overall exposure. | | | | | |
| (2*): Initial potentials of the exposed regions after overall exposure. Note that the photosensitive members used were all PVK-TNF of Ex. A with external application of a voltage of - 700 V. | | | | | |

### Example 11 - Preparation of ROM Type of Electrostatic Charge Recording Card

As shown in Figure 61, a 0.8-mm thick vinyl chloride sheet (85 × 55 mm) was used as the card substrate 4, and a rectangular recess for receiving the electrostatic charge recording member 3 is formed in the upper side of the card substrate. Then, a bonding agent is applied on a support surface of the recording member 3 in which information is recorded, and the member 3 is embedded in the recess with the charge retaining layer exposed to view, followed by pressing for integration. Finally, the polyester film 20 was provided on the card substrate to prepare an electrostatic charge recording card.

### Example 12 - Preparation of DRAW Type of Electrostatic Charge Recording Card

As illustrated in Fig. 62, a vinyl chloride sheet (85 × 55 mm) was used as the card substrate 4, and a recess for receiving the electrostatic charge recording member 3 is formed in the upper side thereof. That recess is provided through its bottom with a hole leading to the back side of the substrate. On the other hand, the electrode 13 is provided on its back side with an exposed electrode portion 6 and an electrode by integral molding, followed by the lamination of the insulating layer 11. Thereafter, the electrostatic charge recording medium was placed and pressed in the recess in the card substrate 4 with the electrode portion 6 being exposed on the through-hole, thereby making the recording medium integral with the card substrate. A silicone rubber film was sticked to the surface of the recording medium (although not illustrated).

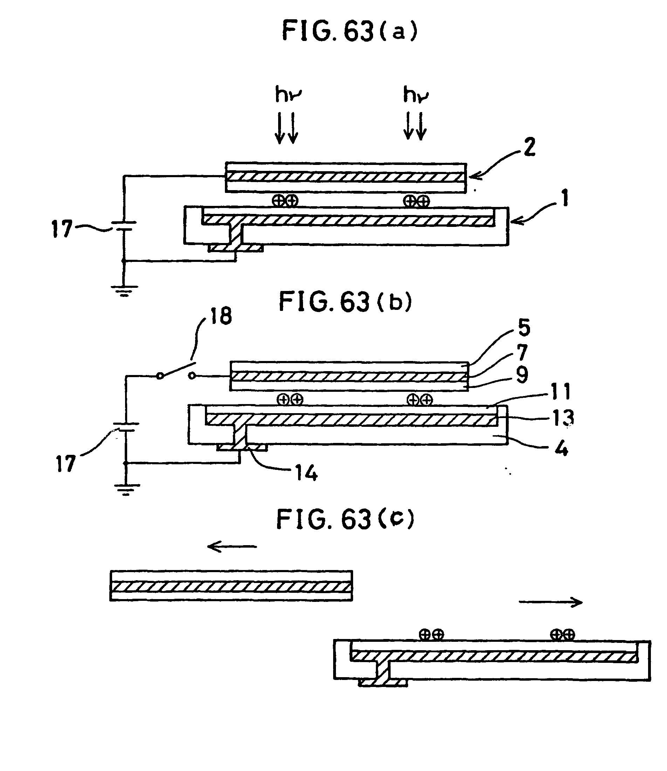

How to record information in this DRAW type of electrostatic charge recording medium is illustrated in Figure 63. After the protective film was first released off, a voltage of 700 V was applied between both electrodes 7 and 13, as illustrated in Fig. 63(a), while exposure was carried out for 1 second using a halogen lamp of 1000 luxes to record the information on the surface of the insulating layer. Thereafter, the protective film was again sticked in place. As a result of the measurement of surface potentials from above this film, it was found that the image information bearing charges were satisfactorily retained and did not attenuated at all after the lapse of three months.

| SCHEDULE | |
|---|---|
| On page 21 : 175 lines/in. | = 68.9 lines/cm |
| 350 picture elements/in | = 137.8 picture elements/cm |
| 14 dots/in | = 5.5/cm |
| On page 22 : 8-inch | = 20.32 cm |

## Claims

1. An electrostatic information recording medium, comprising an electrode (13), an insulating resin layer (11), a photoconductive or an electrically conductive fine particle (12) layer, and a charge transport layer (19), said layers being sequentially laminated one upon another, said fine particles (12) having a function to accumulate electric charge, said charge transport layer (19) directly laminated on said fine particle (12) layer and having a property to transport electric charge with polarity opposite to that of the charge accumulated in the fine particles (12).

2. An electrostatic information recording medium according to claim 1, wherein said fine particle (12) layer comprises fine particles laminated in a single layer or in multiple layers.

3. An electrostatic information recording medium according to claim 1, wherein said fine particle (12) layer is an insulating resin layer with fine particles dispersed therein.

4. An electrostatic information recording medium according to claim 1, wherein said electrode (13) is supported by a support member (15).

## Patentansprüche

1. Elektrostatisches Informationsaufzeichnungsmedium, umfassend eine Elektrode (13), eine isolierende Harzschicht (11), eine lichtleitende oder eine elektrisch leitende feine Partikelschicht (12), und eine Ladungstransportschicht (19), die Schichten sind sequentiell aufeinander laminiert, die feinen Partikel (12) haben die Funktion elektrische Ladungen zu sammeln, die Ladungstransportschicht (19) ist direkt auf der feinen Partikelschicht (12) laminiert und besitzt die Eigenschaft elektrische Ladungen mit einer Polarität, die entgegengesetzt zu der der in den feinen Partikeln (12) gesammelten Ladungen ist, zu transportieren.

2. Elektrostatisches Informationsaufzeichnungsmedium nach Anspruch 1, wobei die feine Partikelschicht (12) feine Partikel umfasst, die in einer Einzelschicht oder in mehreren Schichten laminiert sind.

3. Elektrostatisches Informationsaufzeichnungsmedium nach Anspruch 1, wobei die feine Partikelschicht (12) eine isolierende Harzschicht mit darin dispergierten feinen Partikeln ist.

4. Elektrostatisches Informationsaufzeichnungsmedium nach Anspruch 1, wobei die Elektrode (13) von einer Halterung (15) gehalten wird.

## Revendications

1. Milieu d'enregistrement électrostatique d'informations, comprenant une électrode (13), une couche de résine isolante (11), une couche de particules fines photoconductrices ou électriquement conductrices (12), et une couche de transport de charge (19), lesdites couches étant séquentiellement stratifiées les unes sur les au-tres, lesdites particules fines (12) ayant une fonction d'accumulation de charge électrique, ladite couche de transport de charge (19) étant directement stratifiée sur ladite couche de particules fines (12) et ayant une propriété de transport de charge électrique avec une polarité opposée à celle de la charge accumulée dans les particules fines (12).

2. Milieu d'enregistrement électrostatique d'informations selon la revendication 1, dans lequel ladite couche de particules fines (12) comporte des particules fines stratifiées dans une couche unique ou dans des couches multiples.

3. Milieu d'enregistrement électrostatique d'informations selon la revendication 1, dans lequel ladite couche de particules fines (12) est une couche de résine isolante dans laquelle sont dispersées des particules fines.

4. Milieu d'enregistrement électrostatique d'informations selon la revendication 1, dans lequel ladite électrode (13) est supportée par un élément de support (15).
